(19) Europäisches Patentamt
European Patent Office
Office européen des brevets

(11) **EP 0 495 074 B1**

(12) **EUROPEAN PATENT SPECIFICATION**

(45) Date of publication and mention
of the grant of the patent:
**05.06.1996 Bulletin 1996/23**

(21) Application number: **91915066.4**

(22) Date of filing: **06.08.1991**

(51) Int Cl.6: **F16C 32/06**, F16C 17/03,
F16C 17/06, F16C 33/10

(86) International application number:
**PCT/US91/05565**

(87) International publication number:
**WO 92/02736 (20.02.1992 Gazette 1992/05)**

(54) **HYDRODYNAMIC BEARINGS HAVING BEAM MOUNTED BEARING PADS AND SEALED BEARING ASSEMBLIES INCLUDING THE SAME**

HYDRODYNAMISCHE LAGER MIT VON EINEM TRAGKÖRPER GESTÜTZTEN LAGERSEGMENTEN SOWIE ABGEDICHTETE LAGERZUSAMMENBAUTEN MIT SOLCHEN LAGERN

PALIERS HYDRODYNAMIQUES AYANT DES PATINS MONTES SUR SUPPORT ET ENSEMBLES PALIER HERMETIQUES COMPRENANT LESDITS PALIERS

(84) Designated Contracting States:
**AT BE CH DE DK ES FR GB GR IT LI LU NL SE**

(30) Priority: **06.08.1990 US 563242**

(43) Date of publication of application:
**22.07.1992 Bulletin 1992/30**

(73) Proprietor: **Ide, Russell D.**
**Exeter, Rhode Island 02822 (US)**

(72) Inventor: **Ide, Russell D.**
**Exeter, Rhode Island 02822 (US)**

(74) Representative:
**Kirschner, Klaus Dieter, Dipl.-Phys. et al**
**Forstenrieder Allee 59**
**D-81476 München (DE)**

(56) References cited:
**EP-A- 0 343 620**     **WO-A-88/09443**
**WO-A-91/17367**     **FR-A- 2 212 877**
**US-A- 1 444 841**     **US-A- 2 424 028**
**US-A- 4 496 251**     **US-A- 4 824 122**

## Description

The present invention relates to sealed hydrodynamic bearings.

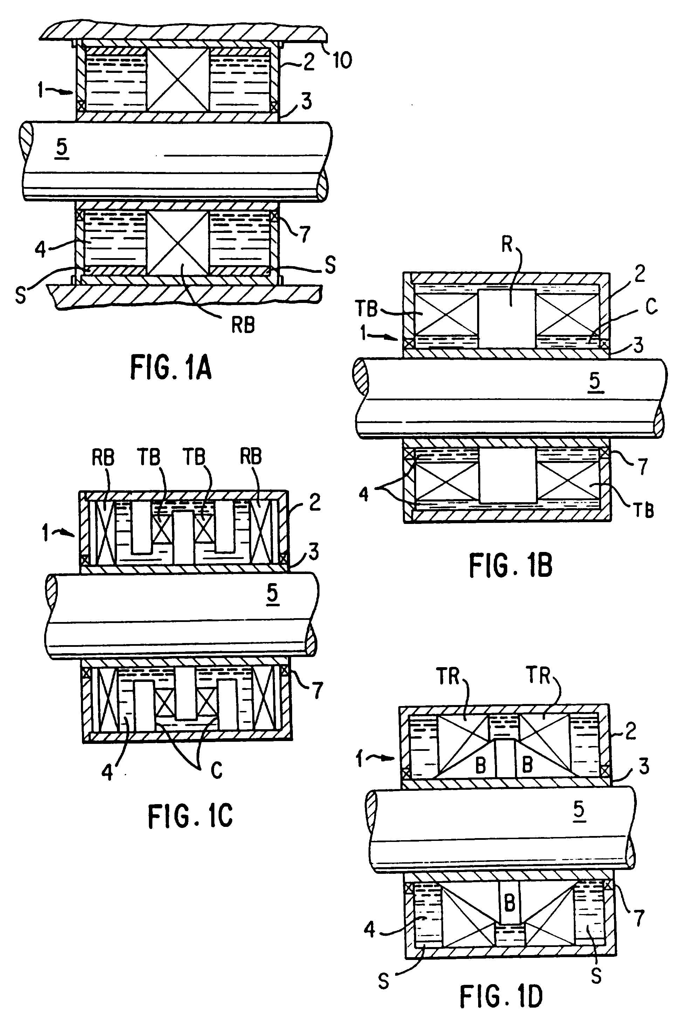

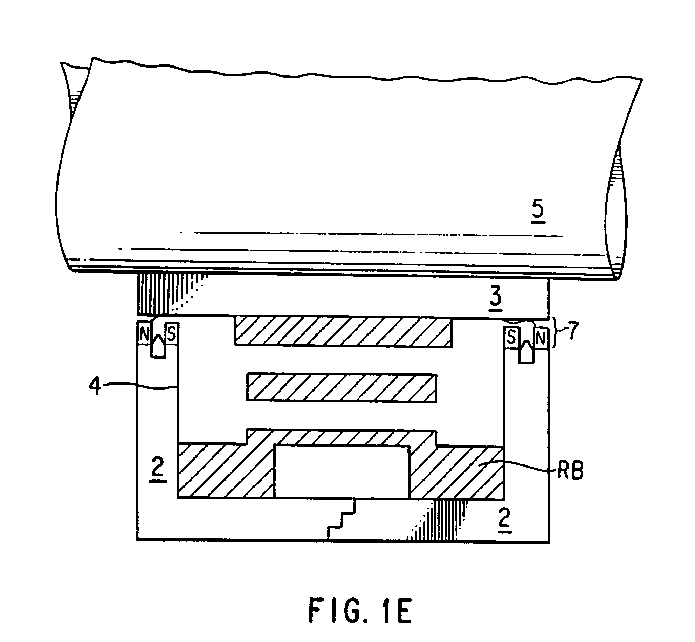

Various hydrodynamic bearings used in the sealed hydrodynamic bearings are known from EP-A-0 343 620 and are depicted in the figures of the present specification with the exception of the figures depicted on sheets 1/29, 2/29, 4/29, 8/29, 26/29, 28/29 and 29/29. WO-A-9 117 367 which has a priority date prior to the priority date of present application but which has been published afterwards, discloses hydrodynamic bearings as depicted in all figures of the present specification with the exception of figure 1E.

The present invention as defined in claim 1 relates to sealed bearing housing assemblies or packs which include one or more hydrodynamic, bearings. Generally, the sealed bearing packs include a sealed housing having a static housing portion, a rotatable housing portion and a seal extending between the static housing portion and the rotatable housing portion to preserve the fluid tightness of the housing when the rotatable housing portion moves relative to the static housing portion.

The rotatable housing portion is mounted on the shaft and rotates with the shaft. The mounting of the rotatable housing portion on the shaft can be done in any way such as splining, threading, keying, gluing, welding, heat shrinking or the like. The static housing portion is secured to the housing and non-rotatable therewith. The static portion may also be secured to the housing in any known way such as splining, keying, gluing, welding, or the like.

Generally either the static housing portion or the rotatable housing portion (usually the static portion) is formed in two or more pieces. This makes assembly of the bearing unit easier, particularly when more than one bearing is sealed within the housing unit.

In accordance with the present invention, a ferrofluidic seal is provided between the static housing portion and the rotatable housing portion. Specifically, one of the two housing portions, preferably the static housing portion, is provided with a permanent magnetic, an electromagnet or some other means for generating a magnetic field in the region of the gap between the rotatable housing portion and the static housing portion. A ferrofluid fills the interior of the housing and is used as the hydrodynamic fluid. Some of the ferrofluid flows into the gap. Because of the presence of the magnetic field, the ferrofluid assumes the shape of an O-ring to completely fill the gap and provide a hermetic barrier, allowing rotation of the rotatable housing position relative to the static housing portion without leakage of the ferrofluid contained in the housing. It can be readily appreciated that such a seal would not wear like elastomeric or other solid seals.

The seals, static housing and rotating housing are formed together to form a ring-like or annular chamber. One or more hydrodynamic bearings, preferably of the type disclosed herein, are located within the chamber. The chamber is filled with hydrodynamic fluid. The hydrodynamic bearing is integral with or fixedly mounted to either the rotatable housing part or the static housing part for movement relative to the other part. A smooth support surface is provided on the other part adjacent the bearing pad surface. The bearing is designed such that, upon rotation of the shaft, a hydrodynamic wedge is formed between the bearing pads and the support surface. In this way, the shaft is supported by the fluid within the film.

Various types of hydrodynamic bearings having a plurality of spaced bearing pads and a support structure can be mounted within the chamber. These bearings may include radial bearings, thrust bearings, combined radial and thrust bearings or any combination of these three types of bearings. Moreover individual thrust pads may be substituted for the thrust bearings of the present invention. The various bearings situated in the housing should be packed, particularly in the axial direction, into a tight relationship to insure proper operation.

The sealed hydrodynamic bearing units of the present invention may have a modular construction in which a standard housing can be used with various standard bearings to accommodate different requirements. The basic components of this modular construction are the housing components, i.e., the static housing portion, the seals and the rotatable housing, an assortment of radial, thrust and combined radial and thrust bearings and an assortment of clips and/or spacers for axially packing the housing to insure proper performance. This modular construction enables the use of standardized parts to achieve a wide variety of results and provides the opportunity for economies of scale in the manufacture of hydrodynamic bearings. Thus, the modular construction offers potential savings in terms of cost of manufacture.

Further, the present invention relates to a sealed bearing assembly which allows easy use of such bearings in applications heretofore reserved for rolling element bearings.

## Brief Description of the Drawings

The details of the invention will be described in connection with the accompanying drawing, in which:

Figure 1A is a cross-sectional schematic illustration of a radial bearing enclosed in a modular sealed housing assembly;

Figure 1B is a schematic cross-sectional illustration of the housing assembly of figure 1A having a thrust bearing assembly enclosed therein;

Figure 1C is a schematic cross-sectional illustration of the housing assembly of Figure 1A having thrust bearings and radial bearings enclosed therein;

Figure 1D is a schematic cross-sectional illustration of the housing assembly of Figure 1A having a pair of combined radial and thrust bearings enclosed therein;

Figure 1E is a sealed bearing assembly using a ferrofluidic seal in accordance with the invention.

Figure 2 is a sectional view of a journal bearing illustrating a sector thereof;

Figure 2A is a schematic view of a single pad made in accordance with the example illustrated in Figure 2;

Figure 3 is an edge view of the pad of Figure 2 illustrating the pad orientation with the support structure in the loaded state;

Figure 4 is a sectional view of a sector of a second example of a journal bearing;

Figure 5 is a view partly in section of a single pad of Figure 4;

Figure 5A is a perspective view of a section a modified form of the bearing of Figure 4;

Figure 5B is a perspective view of a modified form of the bearing shown in Figure 4;

Figure 6 is an end view of the bearing of Figure 4;

Figure 6A is a cross section of the bearing of Figure 6 in a sealed housing assembly;

Figure 7 is a diagrammatic view of the torsional deflection of a beam, greatly enlarged;

Figure 8 is a sectional view of a journal bearing illustrating an example of a bearing which includes two beams;

Figure 9 is an edge view of the pad of Figure 1 illustrating local deflection of the pad surface without support structure deflection, greatly exaggerated;

Figure 10 is an edge view of the pad of Figure 8 illustrating the pad orientation with the support structure in the loaded state.

Figure 10A is an edge view of the pad of Figure 8 illustrating local deflection of the pad surface greatly exaggerated.

Figures 11A and 11B are cross sectional views of a cylindrical journal or blank prior to machining;

Figures 12A and 12B are cross sectional views of a machined journal or blank;

Figures 13A and 13B are cross-sectional views of a further machined journal or blank;

Figures 14A and 14B are cross sectional views of a modified machined journal or blank;

Figures 14C and 14D are cross sectional views of a bearing constructed from the modified machined journal or blank Figures 14A and 14B;

Figure 15 is top view of a thrust bearing having beam mounted bearing pads;

Figure 15A is a cross section of two bearings of the type shown in Figure 15 in a sealed housing assembly;

Figure 16 is a side cross section of the thrust bearing of Figure 15;

Figure 17 is a bottom view of the thrust bearing of Figure 15;

Figure 18 is a perspective view of a portion of the thrust bearing of Figure 15;

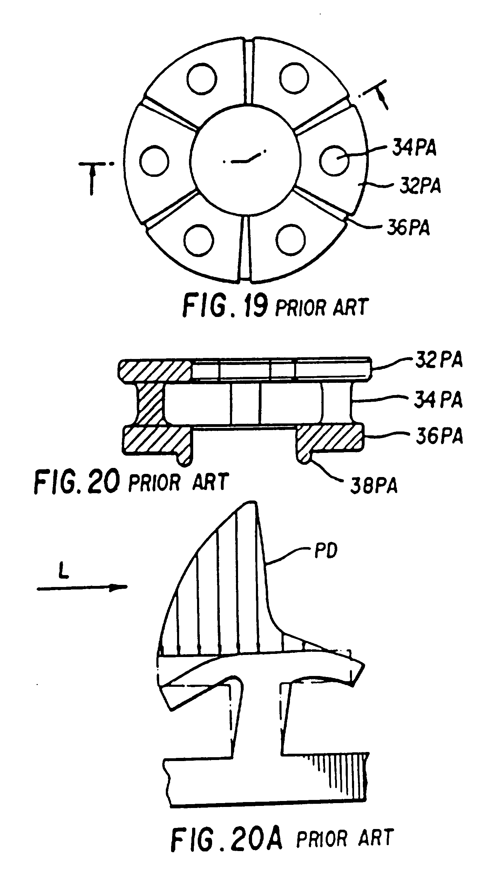

Figure 19 is a top view of a prior art thrust bearing;

Figure 20 is a cross-section of the prior art thrust bearing of Figure 19;

Figure 20A is a schematic representation of a segment of the prior art thrust bearing of Figures 19 and 20 showing the pressure distribution across the surface of a bearing pad;

Figure 21 is a top view of a thrust bearing having a two legged support;

Figure 22 is a side cross-section of the thrust bearing of Figure 21;

Figure 23 is a bottom view of the bearing of Figure 21;

Figure 23A is a bottom view of a modified version of the bearing of Figure 21;

Figure 24 is a perspective view of a segment of the bearing of Figure 21;

Figure 25 is a cross-section of another bearing ;

Figure 26 is a cross-section of another bearing ;

Figure 26A is a cross-section of the bearing of Figure 26 in a sealed housing assembly;

Figure 27 is a side cross-section of another bearing construction;

Figure 28 is a top cross-section of the bearing construction of Figure 27;

Figure 29 is a side cross-section of another bearing construction;

Figure 29A is a cross-section of another thrust bearing construction;

Figure 29B is another cross-section of the bearing of Figure 29A;

Figure 29C is a cross-section of the bearing of Figure 29A in a sealed housing assembly;

Figure 30 is a top cross-section of the bearing construction of Figure 29;

Figure 30A is a top view of the bearing of Figure 29A;

Figure 30B is a bottom view of the bearing of Figure 29A;

Figure 31 is a side view of another journal bearing construction;

Figure 31A is a radial cross-section of a portion of the bearing illustrated in Figure 31;

Figure 31B is a cross-section of the bearing of Figure 31 in a sealed housing assembly;

Figure 32 is a side view of another journal bearing construction;

Figure 32A is a radial cross-section of the bearing of Figure 32;

Figure 32B is a perspective view of the bearing of Figure 32.

Figure 32C is a cross-section of the bearing of Figure 32 in a sealed housing assembly;

Figure 33 is a side view of another journal bearing construction;

Figure 33A is a detail view of a portion of the outer periphery of the bearing of Figure 33;

Figure 33B is a cross-section of the bearing of Figure 33;

Figure 33C is another cross section of the bearing of Figure 33;

Figure 33D is a cross-section of the bearing of Figure 33 in a sealed housing assembly;

Figure 34 is a side view of another journal bearing ;

Figure 34A is a detail view of a portion of the outer periphery of the bearing of Figure 34;

Figure 34B is a cross-section of the bearing of Figure 34;

Figure 34C is another cross-section of the bearing of Figure 34;

Figure 34D is another cross-section of the bearing of Figure 34;

Figure 35 is a side view of a combined radial and thrust bearing;

Figure 35A is a cross-section of the bearing of Figure 35;

Figure 35B is another cross-section of the bearing of Figure 35;

Figure 36 is a side view of another combined radial and thrust bearing;

Figure 37 is a diagrammatic cross-section of the bearing of Figure 36 illustrating the forces acting on the bearing pad;

Figure 37A is a cross-section of the bearing of Figure 37 in a sealed housing assembly;

Figure 38A is a top view of an easily moldable thrust bearing;

Figure 38B is a bottom view of the bearing of Figure 38A;

Figure 38C is an exploded cross-section along the lines indicated in Figure 38A;

Figure 38D is a bottom view illustrating modifications of the bearing illustrated in Figures 38A-C;

Figure 38E is a partial cross-section of the bearing of Figure 38A in a sealed housing assembly;

Figure 39A is a top view of another easily moldable thrust bearing;

Figure 39B is a bottom view of the bearing of Figure 39A;

Figure 39C is partial cross-section showing the support structure for the bearing pads in the bearing of Figures 39A and 39B;

Figure 40 is a side view of a self-lubricating bearing;

Figure 40A is a cross-section of the bearing of Figure 40;

Figure 41 is a side view of a self-lubricating combined radial and thrust bearing ;

Figure 41A is a cross-section of the bearing of Figure 41;

Figure 42 is a cross-section of a sealed bearing assembly in which separate bearing pads are secured to the static housing portion;

Figure 43 is a side view of a combined radial-thrust bearing.

Figure 43A is a cross-section of the bearing of Figure 43.

Figure 44 is a cross-section of a bearing adapted to be mounted to the shaft for rotation with the shaft relative to the housing; and

Figure 45 is a cross-section of another bearing which is adapted to be mounted to the shaft.

## Detailed Description

In describing the bearings in an understandable way, it is helpful to describe the bearing structures as being formed from a cylindrical blank by providing grooves, slits, bores and other openings in the cylindrical blank. As noted below, this is sometimes a useful technique for manufacturing a prototype bearing. However, the reference to the cylindrical blank is primarily intended to assist understanding of the structure of the bearings. It should be noted that although many of the bearings described herein could be manufactured from a cylindrical blank, it is not necessary that any of them be so manufactured. Indeed the bearings can be manufactured in numerous ways, some of which are discussed hereinafter.

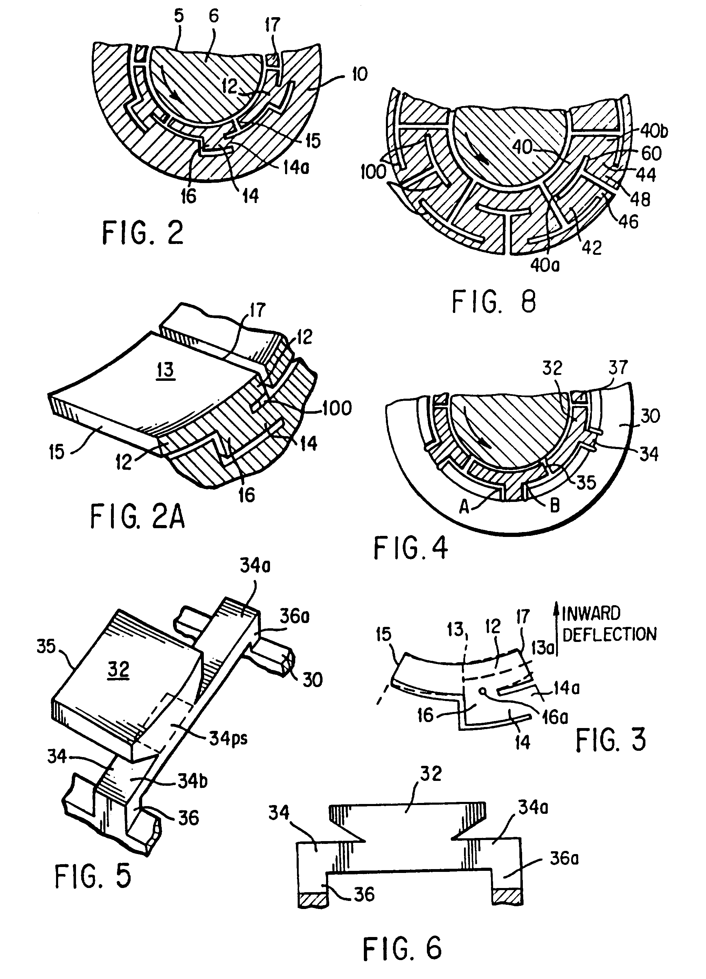

Referring first to Figure 2, the structure therein illustrated is a sector of a journal bearing assembly having grooves and slits formed therein so as to define a housing 10 and a plurality of circumferentially arranged bearing pads 12 each of which is supported by a support structure which includes the housing, a beam 14 and a stub section 16. The bearing defined by the grooves and slits non-symmetrical about the pad circumferential center line 13a (in Figure 3). Accordingly, the bearing illustrated is a radial unidirectional bearing, i.e., it is adapted for radially supporting a shaft for rotation in only one direction. In the illustrated embodiment, the bearing supports the shaft 5 only for rotation in the counter-clockwise direction illustrated by the arrow. On the other hand, if the bearing were symmetrical about the center line of the pad, it would be capable of supporting the shaft 5 for either clockwise or counter clockwise rotation, i.e., the bearing would be bidirectional.

Each bearing pad 12 includes a leading edge 15 and a trailing edge 17. The leading edge is defined as the edge first approached by a point on the circumference of the shaft as it continues to rotate. Similarly, the trailing edge is defined as the edge approached circumferentially later by the same point on the shaft as it continues to rotate. When the shaft 5 is rotating in the proper direction, it moves, on a fluid film, from the leading edge across the bearing pad and off the trailing edge. Optimum performance is obtained when the stub-section 16 supports the bearing pad 12 and hence any load, at a point 16a (Figure 3) between the circumferential center line 13a of the pad 12 and the trailing edge 17 preferably, closer to the center line 13a. The beam 14 should also pivot about a point 14a which is located angularly between the leading edge and the trailing edge so that as a result of deflection of the beam 14, the trailing edge 17 deflects inwardly. Of course, the degree of deflection depends on, among other things, the shape of the beam and the length of the cuts or slits formed in the bearing.

Although specific reference is made to either journal bearings or thrust bearings to facilitate understanding, some of the same principles of bearing design apply regardless of the specific form of bearing being designed. For example, both types of bearings operate on the principle of formation of a hydrodynamic wedge. Further, the major axis of both journal bearings and thrust bearings is the central axis of the cylindrical blank from which the bearing is formed. The circumferential pad center line is the radially extending line passing through the geometric center of the pad and the major axis of the bearing. Accordingly, if either a thrust bearing or a journal bearing is symmetrical about this center line axis, i.e., the major axis, the bearing will be bidirectional.

There are significant differences between thrust bearings and journal or radial bearings. The most prominent difference is, of course, the portion of the shaft supported and consequently the orientation and/or attitude of the bearing pad supports. For instance, while journal bearings support circumferential portions of shafts, thrust bearings support shoulder or axial end portions of shafts. Other differences follow from this fundamental difference. For example, in a radial or journal bearing the pads in the direction of the load take or support the load; whereas, in a thrust bearing, all pads normally share load. Moreover, a journal bearing generally has a built-in wedge due to differences in the shaft and bearing diameters; conversely, there is no such built-in wedge in thrust bearings. Additionally, while a journal or radial bearing controls rotational stability as well as load; a thrust bearing typically only carries load. It should also be understood that the design of journal bearings, particularly hydrodynamic journal bearings, is significantly more complicated than the design of thrust bearings. In part, this is because of the constraints imposed by the need to limit the radial envelope of the journal bearings. In order to accommodate these differences the configuration of the thrust bearings is naturally somewhat different than that of journal bearings. Nevertheless, as is evident from this disclosure, many of the principles discussed herein are applicable to either thrust or journal bearings.

Figures 1A-1D schematically illustrate the sealed bearing unit construction. As illustrated in these Figures, the sealed housing assembly 1 includes a static housing portion 2 secured to the housing, a rotatable housing portion 3 secured to the shaft 5 by splines, threads, keys, welding, gluing, heat shrinking or the like, seals 7 providing a seal between the rotating housing portion 3 and the static housing portion 2, a hydrodynamic fluid 4 located within the sealed housing 1 and one or more hydrodynamic bearings providing radial and/or thrust support between the rotating housing portion 3 and the static housing portion 2.

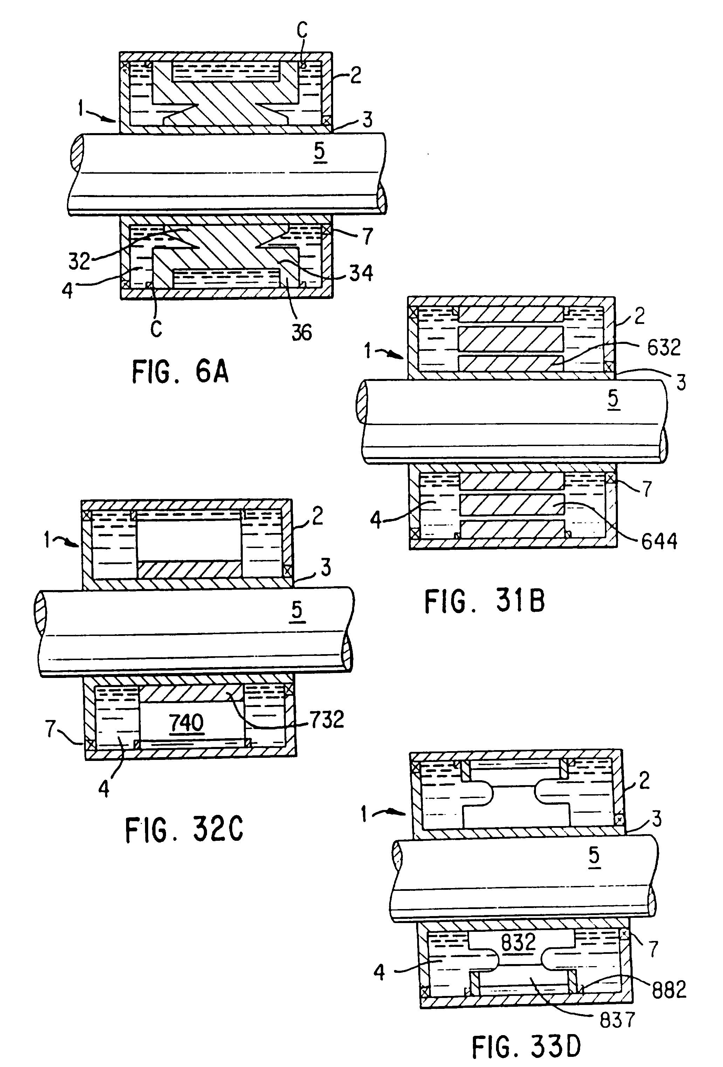

Generally, at least one of the two housing portions, 2,3 is separable. Usually the static housing portion 2 will be axially split or have a removable end cap as shown in Figures 1A-1D. The separability of the housing makes it easier to assemble the bearing components within the sealed housing. As can be appreciated from the drawings, in some cases it would be impossible to assemble the bearing within the housing without separable housing portions. On the other hand, it is sometimes possible to use a two part interlocking housing as shown in Figures 6A, 26A, 29C, 31B, 32C, 33D and 37A.

Figures 1A-1D illustrate various combinations of hydrodynamic bearings within a standard bearing housing construction. The bearings are illustrated schematically and labelled TB to indicate thrust bearings, RB to indicate radial bearings, and TR to indicate combined radial and thrust bearings. As illustrated in these drawings, many possible combinations of bearings can be provided to accommodate different support needs. Better operation of the bearing unit, particularly the thrust aspects thereof occurs if there is no axial play within the housing. Accordingly, spacers can be provided to take up any axial play. In these schematic illustrations, the bearing assemblies also include spacers S and clips C to retain the bearings in position with respect to the housing. The housing portions 2 and 3 can also have threads, splines or the like to fixedly locate the component parts. The spacers S can also function as thrust, radial or combined thrust-radial runners if they have a surface against which the pad can ride.

Figures 1A-D also show that the sealed bearing unit can have a modular construction. Specifically, a standard housings such as that shown in Figures 1A-1D can accommodate a wide variety of bearing arrangements. By using a standard housing, an assortment of standard hydrodynamic thrust, radial and combined radial and thrust bearings and clips and spacers for removing axial play and retaining the bearings in position, various bearing characteristics can be achieved. The spacers are provided with a smooth surface against which the thrust member can ride.

Of course, the sealed bearing unit may be designed for a specific bearing. Examples of specific sealed bearings constructions are illustrated below. In such a case, the housing can be dimensioned as required to optimally support the bearing for which it encases. Thus, normally the need for spacers and clips would be eliminated.

In accordance with the present invention, a ferrofluidic seal is used. An example of a suitable ferrofluidic seal construction is illustrated in Figure 1E. It should be understood at the outset that a similar seal construction could be used as the seal 7 in any of the hydrodynamic fluid filled sealed bearing assemblies 1 disclosed herein.

As shown in Figure 1E, the construction of a sealed bearing assembly using a ferrofluidic seal is generally the same as that of the other sealed bearing assemblies disclosed herein; it includes a static housing portion 2 secured to the housing, a rotatable housing portion 3 secured to the shaft 5, a hydrodynamic fluid 4 located within the sealed housing, a seal structure 7 at each axial end of the assembly and a hydrodynamic bearing, in this case a radial bearing RB, providing support between the rotatable housing portion 3 and the static housing portion 2. It should be noted that, in the view shown in Figure 1E, hydrodynamic fluid 4 fills the spaces in the support structure of the radial bearing RB giving the bearing a discontinuous appearance.

To provide a ferrofluidic seal, ferrofluid must be introduced into the gap and a magnetic field must be established in the region of the gap between the rotatable housing portion and the static housing portion to position the ferrofluid precisely. Presently, it is preferred that the magnetic field be established by placing a permanent magnet or an electromagnet on either the rotatable housing portion 3 or the static housing portion 2 in the region of the gap. In the illustrated embodiment, the magnet is placed on the radially innermost edges of the static housing portion 2. The north pole N and south pole S of the magnet are spaced so that a magnetic field for positioning the ferrofluid is generated in the region of the gap between the rotatable and static housing portions. In accordance with the present invention, the hydrodynamic fluid 4 in the sealed housing is a ferrofluid. Because the sealed housing is filled with ferrofluid, the introduction of ferrofluid into the gap is easily accomplished. As shown in FIG. 1E a small amount of the ferrofluid hydrodynamic fluid 4 flows into the gap and, under the influence of the magnetic field, assumes the shape of an O-ring to completely fill the gap.

The ring of ferrofluid under the influence of the magnetic field provides a hermetic barrier allowing rotation of the rotatable housing portion 3 relative to the static housing portion 2 without leakage of the ferrofluid 4 contained in the housing.

It can be readily appreciated that the above-described seal arrangement offers advantages over solid contact seals such as elastomeric seals. One significant advantage is, of course, the lack of wear. Also, since the carrier for the coated magnetic particles of many ferrofluids is a synthetic lubricant, the ferrofluid functions quite well as a hydrodynamic fluid. Thus, it can be appreciated that there are many possible applications for sealed bearing assemblies employing ferrofluidic sealing constructions. In this regard, it should again be noted that ferrofluidic seals may be used as the seals 7 in any of the sealed bearing assemblies 1 described herein.

It should be recognized that the specific shape of the housing illustrated in Figures 1A-1D is not necessary. For example, when the housing is intended to support only a radial bearing, it is likely to have a radially elongated rectangular cross-section. Generally, an axially housing such as that shown in Figures 1A-1D would be used when the bearing housing is to encase a plurality of bearings or a bearing assembly. When individual bearings are involved, the housing would be shorter in the axial direction. As noted above, the housing segments may be subdivided into portions, if necessary, to allow assembly of a desired bearing configuration. The rotatable housing portion could simply be a cylindrical sleeve and the static housing portion could be a cylindrical member with one or more end walls as shown in Figure 1A-1D. The static housing 2 has a removable end wall to allow assembly. Another housing construction, this one having an interlocking cylinder configuration shown in Figure 6A, among others.

Alternatively, the static housing portion could be a cylindrical sleeve and the rotating housing portion could be an inner sleeve with outwardly projecting flanges or end walls sealed to the inner periphery of the cylindrical sleeve. Moreover, though not shown, either the static housing portion or the rotating housing portion could have a centrally projecting flange; this is particularly helpful to provide a thrust runner surface. Of course, the thrust runner surface can be provided by spacers clipped or wedged into engagement with either the rotating surface or the static housing portion or screwed onto one of the surfaces.

Thus, it can be seen that there are many ways to provide a sealed housing enclosing a generally cylindrical space and having two portions which are rotatable with respect to one another in a way which allows assembly of one or more hydrodynamic bearings within the cylindrical space. The choice of any specific housing configuration depends on the nature of the bearing assembly sealed within the housing and on the environment in which the bearing is to be used.

The choice of a hydrodynamic fluid depends on the particular application. However, generally motor/spindle oil or transmission fluid would be an appropriate fluid.

The selection of specific bearings also depends on the particular application. Naturally, known hydrodynamic bearings can be used. However, the present invention provides bearings which offer improved results.

Referring now to Figures 2, 2A and 3, it will be seen that the pad 12 is provided with an arcuate face 13 which corresponds essentially to the radius or arc of the outer diameter of the shaft which the pad will be supporting (via the fluid film) and each pad is defined by axially extending and radially extending edges. The axially extending edges comprise the leading and trailing edges. The beam is shown both in a static position (solid lines) and in a deflected position (phantom lines) in Figure 3. The basic construction of the support structure as illustrated in Figure 1, is created by the use of small slits or cuts through the wall. Typically these slits or radial cuts are between 0.051 to 3.175 mm (0.002 to 0.125") wide. The degree of deflection can be varied by varying, among other things, the length of the cuts. Longer cuts provide a longer moment arm which yields greater deflection. Shorter cuts yield beams having less flexibility and higher load carrying ability. In selecting a length of cut or slit, care must be taken to avoid resonance. Also, a piezoelectric element 100 or some other means for forcibly altering the deflection characteristics of the bearing may be located between the pad and support structure (as shown) as within the support structure. If a piezoelectric element is provided, wires, metal strips or some other means for supplying current to the piezoelectric element must be provided.

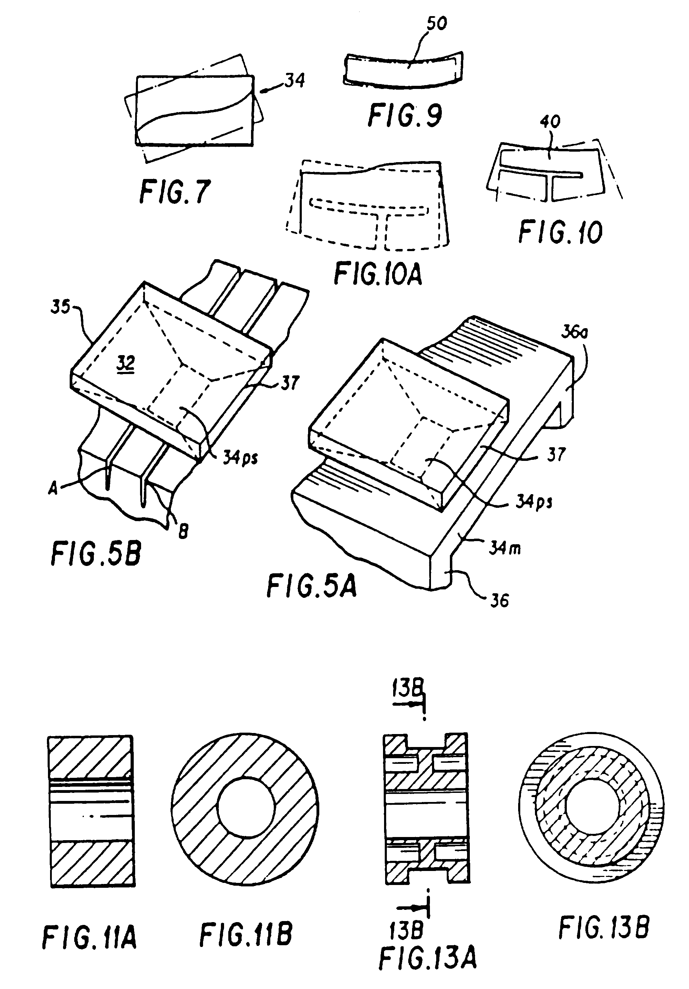

By locating the end of beam 14 as shown, the deflection downward about the connection point 16a will result in inward movement of the trailing edge 17 of the pad 12 outward movement of the leading edge 15 and a slight flattening of the pad 12, as seen in the dotted lines of Figure 9. As a result of this deflection, the gap between the pad face 13 and the outer surface of the shaft 5, through which fluid flows, becomes wedge shaped to yield the well-known hydrodynamic support effect. Ideally the ratio of the spacing between the trailing edge and the shaft versus the spacing between the leading edge and shaft is between 1:2 to 1:5. In other words, the spacing between the leading edge and shaft should be between 2 to 5 times greater than the spacing between the trailing edge and the shaft. In order to attain this ideal spacing or wedge ratio for any specific application, appropriate deflection variables including number, size, location, shape and material characteristics of the unitary element must be selected. A computer aided finite element analysis has proven to be the most efficacious means of optimizing these variables. It should also be noted that the "ideal wedge" depends on desired performance characteristics. For example, the ideal wedge for maximizing load carrying ability is not the same as the ideal wedge for minimizing friction associated power consumption. Computer aided analysis is particularly useful in a bearing such as the type described above which permits movement in all six directions (six degrees of freedom).

While this technique has provided superior results, it has been observed that, in some cases, a bearing designed for optimal performance under simulated operating conditions does not perform optimally under actual operating conditions. The bearings of the present invention can be adjusted in response to sensed operating conditions to correct any operating deficiencies. More specifically, the bearings can include separate elements for physically altering the wedge shape, pad surface and/or deflection characteristics of the support structure. The separate elements can be controlled by a central processing unit (CPU) which in turn receives signals indicative of wedge quality. For example, the sensors can sense physical characteristics such as temperature, shaft to pad contact, torque, noise, power consumption, etc. The signals from the sensors are transmitted to the CPU and compared with conditions indicative of optimum wedge formation. When there is a substantial deviation between the actual sensed conditions and the conditions indicative of optimum wedge quality, the CPU transmits a signal to the means for physically adjusting the wedge shape, pad surface and/or deflection characteristics of the support structure to forcibly adjust the wedge to achieve optimum wedge formation. Alternatively, or in addition, the CPU can be responsive to direct, manually input, commands such as "INCREASE RIGIDITY" or "RAISE TRAILING EDGE". When such a command is received, the CPU undergoes a routine predetermined to achieve the desired result.

Various means can be used to physically alter wedge quality. For example, wedge quality can be physically altered by forcing hydraulic fluid into damping chambers (discussed below) to alter the damping characteristics of the bearing support structure. Alternatively, a mechanical rod or jack screw can be brought into contact with the support structure to physically alter the deflection characteristics of the support screw. Either of these means could be electrically controlled.

Although many means could be used to physically adjust the wedge in response to sensed operating conditions, it is presently believed that the best such means is to provide one or more piezoelectric elements in the interstices within the bearing support structure or between the support structure and the bearing pad. The provision of piezoelectric elements in this matter makes it possible to actively control or adjust pad shape and orientation and to affect the deflection characteristics of the support structure. More specifically, it is known that the application of an electric current to certain crystals and ceramics materials can produce mechanical expansion forces. When an altering voltage is applied, the crystal or ceramic material undergoes thickness oscillations. However, when a direct current is constantly applied the change in thickness does not vary. Thus, it is known that certain materials can change dimensions when subjected to voltage. Notable among these materials are quartz, rochelle salt (potassium, sodium tartarade), properly polarized barium titanade, ammonium dihydrogen phosphate, ordinary sugar and certain ceramics. Of all the materials that exhibit the piezoelectric effect, none possesses all the desirable properties such as stability, high output, insensitivity to temperature extremes and humidity, and the ability to be formed into any desired shape. Rochelle salt provides the highest output, but requires protection from moisture and air and cannot be used above 45°C (115°F). Quartz is undoubtedly the most stable, yet its output is low. Because of its stability, quartz is quite commonly used for a stabilizing in electronic oscillators Often the quartz is shaped into a thin disc with each phase silvered for attachment of electrodes. The thickness of the plate is ground to the dimension that provides a mechanically resonant frequency corresponding to the desired electrical frequency. This crystal may then be incorporated in an appropriate electronic circuit with frequency controls.

Rather than existing as a single crystal, as are many piezoelectric materials, barium titanade is polycrystalline; thus it may be formed into a variety of sizes and shapes. The piezoelectric effect is not present until the element is subjected to polarizing treatment.

The piezoelectric elements could be located in the interstices of any of the hydrodynamic bearings of the present invention. However, the convenience of placing a piezoelectric element within the support structure or between the support structure and the bearing pad naturally depends on the spacing between the support structure and the bearing pad or within the support structure. Since the bearings described hereinafter have a wide variety of intersticial spacing and because the actual size of the spacing depends on the size of the bearing, the selection of a bearing form from the varieties described hereinafter for use in a piezoelectrically controlled bearing depends on, among other things, the diameter of the bearing to be used.

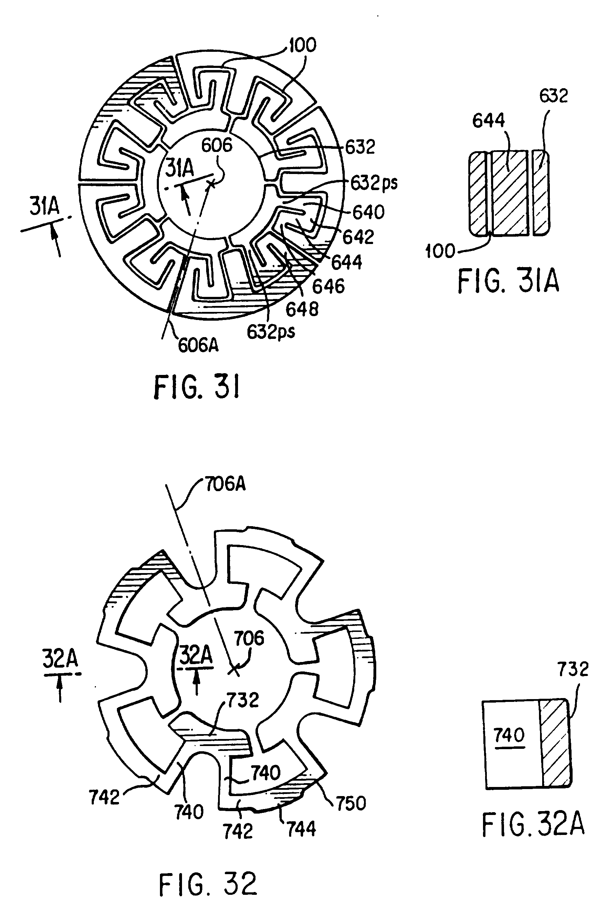

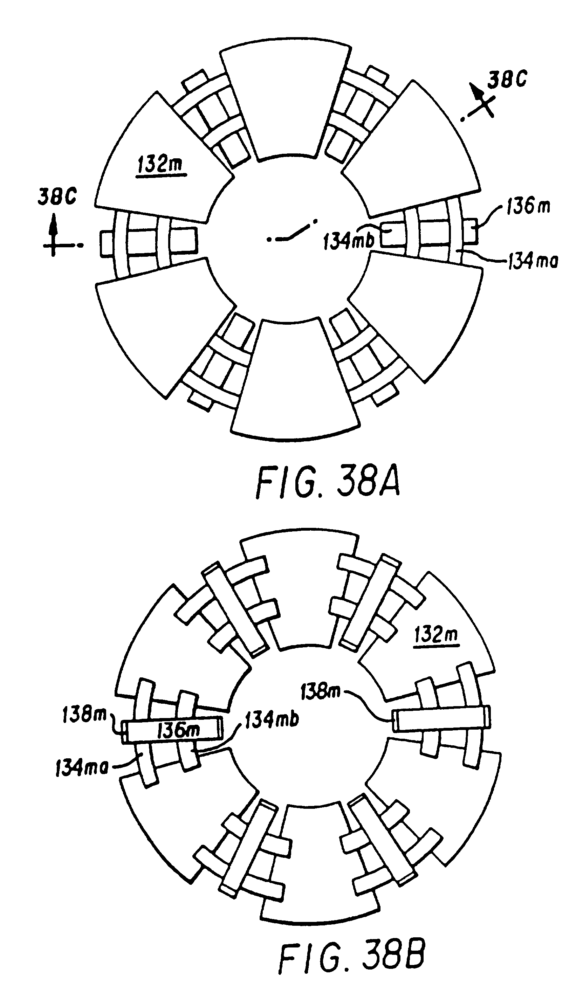

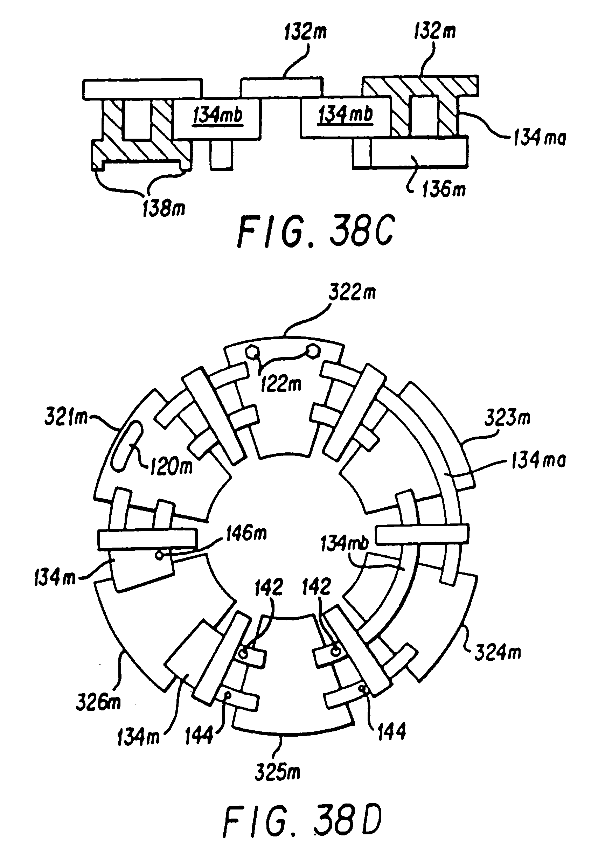

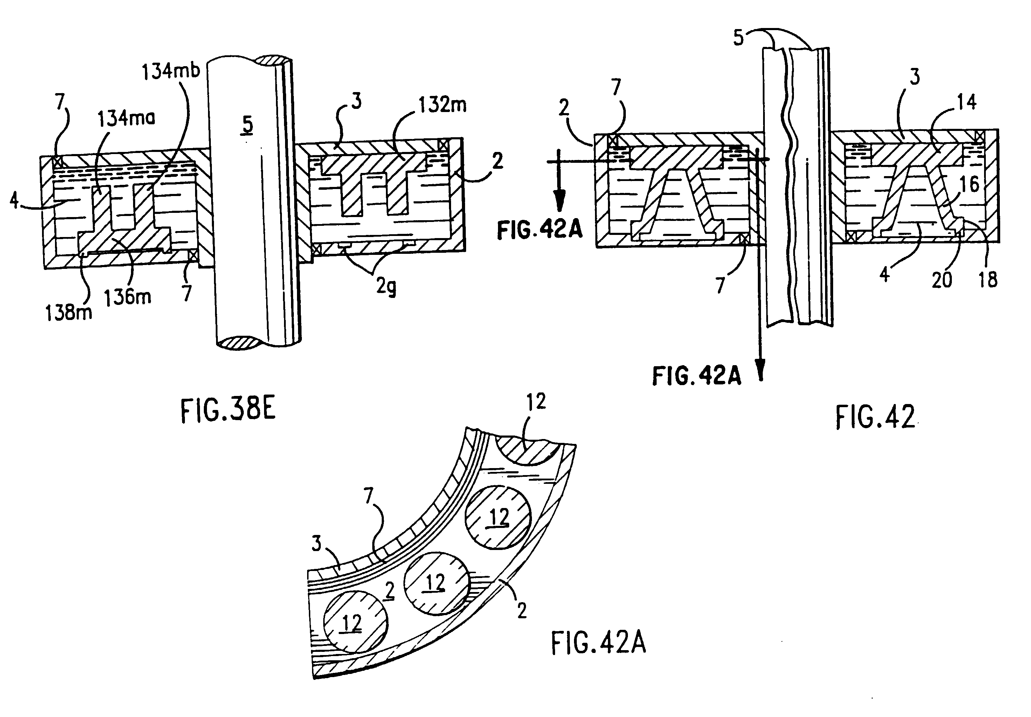

For a relatively large bearing in which the openings in the support structure are proportionately larger, a bearing constructed along the lines of the bearings illustrated in Figures 2, 8, 25, 31 and 37 would be appropriate. On the other hand, for very small bearings in which the interstices or spaces are proportionately much smaller a bearing of the type shown in Figure 32 or Figure 38 would be more appropriate. It should be kept in mind that when the size of the piezoelectric element becomes close to the size of the support structure elements themselves, the effect of the piezoelectric element on the overall bearing construction becomes proportionately greater. Under normal circumstances, the piezoelectric elements are intended only to provide small modifications to the bearing performance, since the bearings even without the piezoelectric element function, close to optimally. Thus, the provision of a piezoelectric element filling the space within the support structure of the bearing at Figure 32 would alter the essential character of the bearing from a hydrodynamic bearing to a piezoelectrically controlled bearing. In some cases this may be desired.

For example, the bearing shown in Figures 2 and 2A can include piezoelectric elements 100 disposed within the support structure and between support structure and the bearing pads. Electrical leads (not shown) are connected to each of the piezoelectrical elements. The supply of current to the electrical leads is controlled by a control system. Preferably, the control system includes a central processing unit (CPU) which controls all of the piezoelectric elements in response to signals obtained from sensors monitoring the condition of the hydrodynamic wedge or in response to manually input signals.

One example of a control system controlling the piezoelectric elements 18 in the bearings of the present invention includes a CPU which receives input signals from various sensors which monitor conditions indicative of the quality of the hydrodynamic wedge. For example, the CPU could receive signals from a temperature sensor, a noise sensor, a shaft to pad contact sensor, power consumption sensor, torque sensors and/or strain sensors. The signals received from each of these sensors can then be sequentially compared to values stored in a read-only memory (ROM) which are indicative of proper wedge formation. The ROM could include stored values for one or more desired wedge formations such as "MAXIMUM LOAD CARRYING ABILITY" or "LOW FRICTION/LOW POWER". When it is determined that the sensed conditions fall outside of the appropriate range, a diagnostic analysis could be performed to determine the appropriate corrective measure. As a result of this diagnostic analysis, a determination of which, if any, of the piezoelectric elements are to be charged and the extent to which they are to be charged can be made.

The bearing of Figure 8 can include piezoelectric elements 100 provided in selected areas to allow fine tuning of the hydrodynamic wedge. Again, there are leads (not shown) connected to each piezoelectric element and the control of the current to the piezoelectric elements is controlled by a control system processing unit of the type described above.

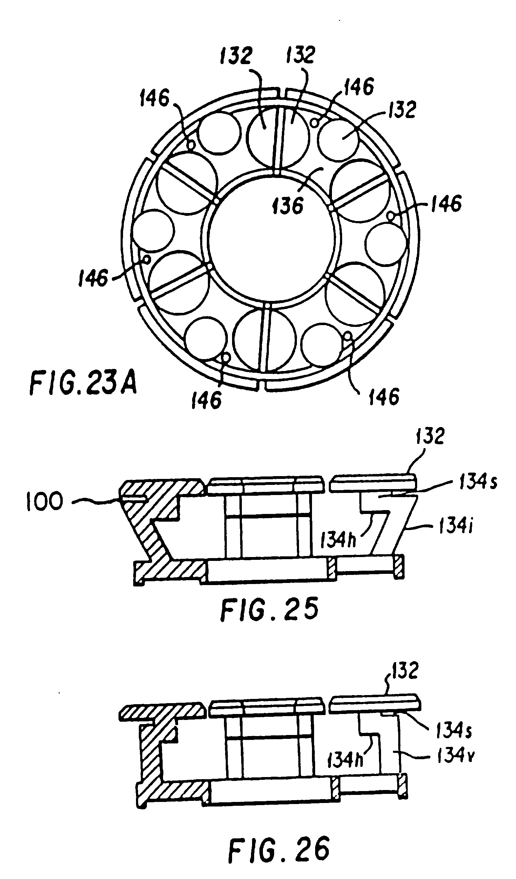

The bearing of Figure 25 can include piezoelectric elements 100 located between the support structure and the bearing pad 132 to allow selective precise control of the amount of downward deflection of the bearing pad 132. In this particular instance, the piezoelectric elements 100 are provided in a common location for each of the bearing pads so that the piezoelectric elements have a single function, i.e., controlling the downward deflection of the bearing pads. Naturally, additional piezoelectric elements 100 could be provided in other locations for other purposes if desired. Again, the piezoelectric elements 100 have leads (not shown) connected thereto and the flow of current to the leads is controlled by a central processing unit of the type described above.

The bearing of Figure 31 can include piezoelectric elements 18 located in selected areas to allow selective adjustment of the wedge according to sensed operating conditions. Once again, the leads are connected to the piezoelectric elements 18 and the flow of current to the piezoelectric elements through the electrical leads is controlled by a control system which may be of the type described above. It should also be noted that the flow of current to the piezoelectric elements can be controlled by a manually operated electrical control system. It is believed however that better results are obtained through the use of a central processing unit.

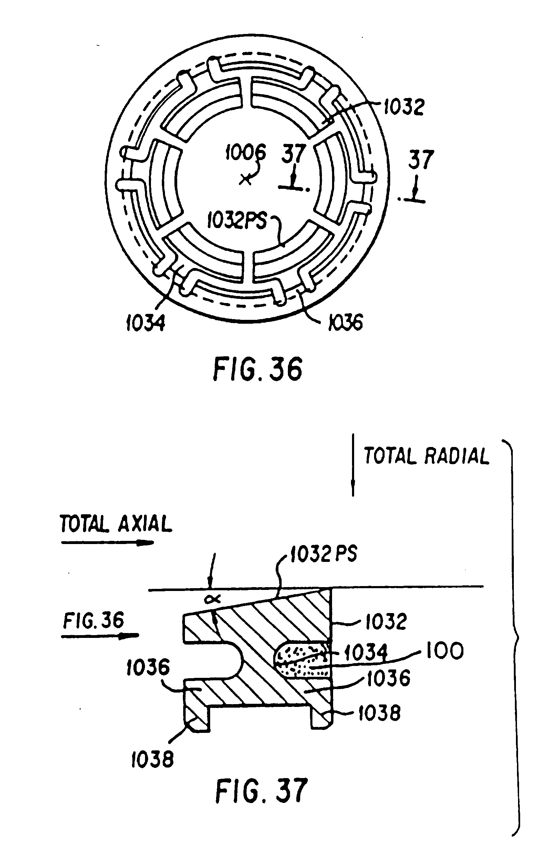

The combined radial and thrust bearing of Figure 37 can include piezoelectric material 100 loaded into a space between the support structure and the bearing pad. Electrical leads connected to the piezoelectric material 100 apply current selectively to the piezoelectric material to cause a change in the dimension of the piezoelectric materials such that the deflection characteristics of the bearing are controlled. The flow of current to the leads and hence the flow of current to the piezoelectric material is preferably controlled by a central processing unit.

In a similar fashion, any of the bearings of the present invention can include one or more piezoelectric elements to allow adjustment of the deflection characteristic of the bearing.

Referring to Figures 4 and 5, there is shown a second illustrative example of a bearing, in which the bearing is formed with slits or cuts and grooves to define a bearing housing 30 with a bearing pad 32 that is supported from the housing by a support structure which includes a beam having a pair of beam portions 34a, 34b which extend substantially in a single line away from the pad. Moreover, the pad may be undercut so that it is supported by the beams only on a pad support surface 34ps. Referring to Figure 5, it will be seen that the beams 34, 34a have a convenient stub beam end as is 36, 36a which acts as a cantilever support for the beam.

As is evident from Figure 4, the perspective view of Figure 5 shows only a portion of the pad 32. The complete pad is illustrated in Figures 5A and 50 which show possible modifications of the bearings illustrated in Figure 4. As is clear from the drawings, the pad support surface 34ps is located closer to the trailing edge 37 than the leading edge 35. With this construction, twisting of the beam, as illustrated in Figure 7, will take place intermediate the beam and create the torsional deflection illustrated. Again the primary flexibility is developed by small cuts or slits through the bearing housing wall. These cuts provide the bearing pad with six degrees of freedom (i.e., the pad can translate in the +x,-x, +y,-y, +z and -z directions as well as rotate about the x, y and z axes) and are designed to optimize hydrodynamic wedge formation. If the cuts or slits were terminated before breaking through to form beam portions 34a and 34b, the pad 32 would be supported by a continuous cylindrical membrane 34m as shown in Figure 5A. The membrane acts as a fluid damper upon which the pad 32 is supported. The termination of the cuts would occur at Point A and Point B of Figure 4. The flexibility of the membrane combined with the fluid lubricant, provides a means to vary the damping action and to isolate the pad from the housing. The damping takes the form of a dash pot that exhibits high damping characteristics. As with the bearing illustrated in Figures 1-3, the bearing illustrated in Figures 4-7 is non-symmetrical about its pad center line and is therefore a unidirectional bearing. Accordingly, the bearing has a leading edge 35 which deflects outward and a trailing edge 37 which deflects inward to form a wedge. Again, the wedge ratio of spacing between the trailing edge and the shaft to the spacing between the leading edge and the shaft) should be between 1:2 to 1:5. Moreover, the location of the center of action of the load which is primarily determined by the location of pad support portion 34ps of the beam 34 with respect to the pad should, again, be between the circumferential center of the pad face and the trailing edge, preferably closer to the circumferential center of the pad face.

As shown in Figure 5B, the beam may be defined more simply than shown in Figure 5 by simply extending the cuts or slits downward from points A and B.

Figure 6A illustrates a bearing of the type shown in Figure 6 in a sealed bearing unit. As shown therein, the bearing is secured to a static housing portion 2 in a known manner, e.g., splines, threads, clips, adhesive welding or any combination thereof. The bearing pads 32 are adapted to support a rotating surface of the rotating housing portion 3. The rotating housing portion 3 is rotatably secured to the shaft by splines threads heat shrinking or the like. The bearing is surrounded by hydrodynamic fluid 4 and seals 7 seal the static 2 and rotating 3 housing portions with respect to one another. As described above, the static housing portion 2 is secured to and functions as a portion of the static shaft housing and the rotatable housing portion 3 is secured to the shaft 5 and functions as an extension of the shaft 5. Thus, when the shaft 5 rotates, the housing portion 3 rotates relative to the housing portion 2 and the bearing connected thereto. In this way, the shaft is supported by the bearing through the rotatable housing portion.

Referring to Figure 8, there is shown a third illustrative example of a bearing . In this example, internal slits or cuts are provided to create a beam on beam support structure. Specifically, the bearing is formed with grooves and slits or cuts to define a pad 40 which is supported from a housing by beams 42 and 44. The pad is connected to the beams at support stubs 40a and 40b. Beam attachment to the housing is at support stubs 46 and 48. Again the bearing consists of the thin cuts or slits shown cut through the bearing wall. The cut or slit 60 below the pad surface introduces additional flexibility such that under load the pad changes shape to form an airfoil for the introduction of lubricant. Thus, as a result of the beam on beam two point support, the pad acts as a spring like membrane.

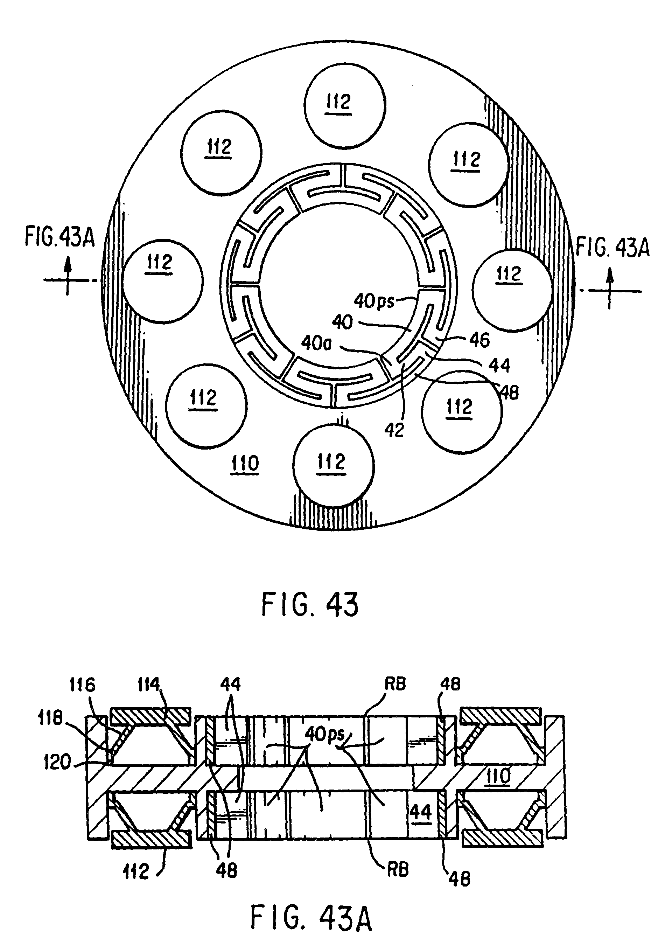

An example of a bearing of the type shown in Figure 8 used in a combined radial-thrust unit is described below in connection with Figures 43 and 43A.

Figure 10A shows the deflected shape of the pad 40 under load. As shown in the drawings (exaggerated) the pad can be formed and supported so as to deflect to an airfoil shape under load. The airfoil dramatically improves performance. As is evident from the drawings, the pad is capable of displacement in the x, y, and z directions as well as rotation about the x, y, and z axes, that is, the pad has six degrees of freedom. Again, the structure allows optimal hydrodynamic wedge formation.

Referring to Figure 9, there is shown the local inherent deflection of the face pad 50 where the pad flattens under load. These deflections are combined with the support structure deflection shown in Figures 3 and 10 but are of a lower magnitude. The net result is the shape shown in Figures 3 and 10 but with a face curvature that has been minutely flattened.

Figures 31 and 31A illustrate another example of a journal bearing. The bearing construction illustrated in Figures 31 and 31A differs from the previously described journal bearing constructions in that the bearing is bidirectional, i.e., the bearing is capable of supporting a shaft for either clockwise or counterclockwise rotation as viewed in Figure 31. The bearing is bidirectional because the pads are symmetrical about their center line, which are defined is the radial extending line passing thru the bearing major axis (606) and the geometric center of the pad. Like the previously described journal bearings, the bearing of Figures 31 and 31A is formed with a plurality of thin radial and circumferential slits to define a plurality of circumferentially spaced bearing pads 632.

The support structure for each of the bearings pads 632 is somewhat similar to the support structure for the journal bearing illustrated in Figure 8. In particular, each bearing pad 632 is supported by a beam support structure at two pad support surfaces 632ps. The beam network connected to the bearing pads at each pad support surface 632ps is identical yielding the symmetrical construction of the bearing which makes the bearing bidirectional. For purposes of simplifying this description, only the network of beams which supports the bearing at one pad support surface will be described since the other pad support surface is supported in an identical fashion. Thus, as shown in Figure 31, a first, generally radially extending, beam 640 is connected to the bearing pad 632 at the pad support surface 632ps. A second, generally circumferential, beam 642 is connected to the radially outermost end of beam 640. A third, generally radial, beam 644 extends radially inward from the beam 642. A fourth, generally circumferential, beam 646 extends from the radially innermost portion of the beam 644. A fifth, generally radial beam 648 extends radially outwardly from a beam 644 to the housing portion of the support structure. In summary, each bearing pad 632 and the bearing illustrated in Figure 31 is supported by ten beams and the bearing housing. Further, as discussed below, by forming radially extending circumferentially spaced grooves or continuously extending circumferential grooves in the housing portion of the support structure, the housing portion of the support structure can be designed to act as a plurality of beams or membranes. It should also be noted that, like the bearing in Figure 8, the cut or slit formed below the pad's surface introduces additional flexibility such that under load the pad changes shape to form an air foil for the introduction of lubricant. Thus, as a result of the beam on beam two point support, the pad acts like a spring-like membrane.

Figure 31A is a radial cross-section of Figure 31 showing the third beam 644, the bearing pad 632 and the housing.

Figure 31B illustrates a bearing of the type shown in Figures 31 and 31A in a sealed bearing unit. As shown therein, the outer periphery of the bearing is rotatably secured to the static housing portion 2. The bearing pads 632 are adapted to support a rotating surface of the rotating housing portion 3. The bearing is surrounded by hydrodynamic fluid 4 and seals 7 seal the static 2 and rotating 3 housing portions with respect to one another. As described above, the static housing portion 2 is secured to and functions as a portion of the static shaft housing and the rotatable housing portion 3 is secured to the shaft 5 and functions as an extension of the shaft 5. Thus when the shaft 5 rotates, the housing portion 3 rotates relative to the housing portion 2 and the bearing connected thereto. In this way, the bearing supports the rotating shaft through the rotating housing portion.

Figures 32, 32A and 32B illustrate another journal bearing construction . This bearing construction differs from the previously described bearing constructions in that the bearing pads and support structure are defined by relatively large grooves and openings formed in a cylindrical blank. Normally, this type of construction would be formed by milling the blank rather than electrical discharge machining or some other similar technique for farming small grooves as with the previously described embodiments. An advantage of the bearing construction illustrated in Figure 32 is that in applications requiring extremely small bearings it is easier to form precisely the proportionately larger cuts and openings required to form a bearing of the type illustrated in Figures 32, 32A and 32B as compared to the proportionately smaller cuts and openings required by the construction of, for example, Figures I, and 8. Moreover, the large grooves or openings are generally easier to mold or extrude Bearings formed by larger cuts also find use in applications requiring extremely large bearings with stiff bearing pad support structures.

The bearing pads shown in Figure 32 are symmetrical about their pad center line, 706A. Hence, the bearing is bidirectional. Moreover, as best shown in the perspective view of Figure 328 the bearing has a continuous cross-section with no hidden openings. Hence, it is easily extrudable and easily moldable. Naturally, the support structure can be altered by providing discontinuities in the cross-section, e.g., by providing radially extending circumferential grooves or nonsymmetrically disposed radially extending openings to alter the support structure and thereby alter the performance characteristics. The bearings major axis is 706.

As shown in Figure 32, the bearing includes a plurality of circumferentially spaced bearing pads 732. Each bearing pad 732 is supported by a support structure which includes a pair of generally radial beams 740 connected to the bearing pad 732 at a pad support surface. A second, generally circumferentially extending, beam 742 supports each of the beams 740. Beams 742 are connected to the housing or support stubs 744 in a cantilever type fashion. In this bearing, the beams 740 can be regarded as a primary support structure; the beams 742 can be regarded as a secondary support structure; and the beams 744 can be regarded as a tertiary support structure.

The second beams 742 shown in Figure 32 are defined by forming a plurality of axially extending circumferential grooves 750 in the housing of the support structure. In order to maintain the symmetry of the bidirectional bearing, these grooves are circumferentially space about pad center lines 706A in a manner identical to the circumferential spacing of the bearing pads 732.

Naturally, similar circumferentially spaced radial grooves could be provided in any of the previous bearing constructions. For instance, as noted above, such grooves could be formed in the periphery of the bearing construction illustrated in Figures 31 and 31A to provide a further beam-like support.

Figure 32A is a radial cross-section of a portion of the bearing illustrated in Figure 32. In this cross-section, the bearing pad 732 and first beam 740 are visible.

Figure 32B is a perspective view of the bearing of Figure 32. It should be noted that although the peripheral, circumferential and cylindrical portions of the bearing are depicted in a somewhat segmented fashion to emphasize the curvature, these curved surfaces are in fact continuously curved.

Figure 32C illustrates a bearing of the type shown in Figures 32, 32A and 32B in a sealed bearing unit. As shown therein, the support stubs 74 of the bearing are rotatably secured to the static housing portion 2. The bearing pads 732 are adapted to support a rotating surface of the rotating housing portion 3. The bearing is surrounded by hydrodynamic fluid 4 and seals 7 seal the static 2 and rotating 3 housing portions with respect to one another. As described above, the static housing portion 2 is secured to and functions as a portion of the static shaft housing, and the rotatable housing portion 3 is secured to the shaft 5 and functions as an extension of the shaft 5. Thus, when the shaft 5 rotates, the housing portion 3 rotates relative to the housing portion 2 and the bearing connected thereto.

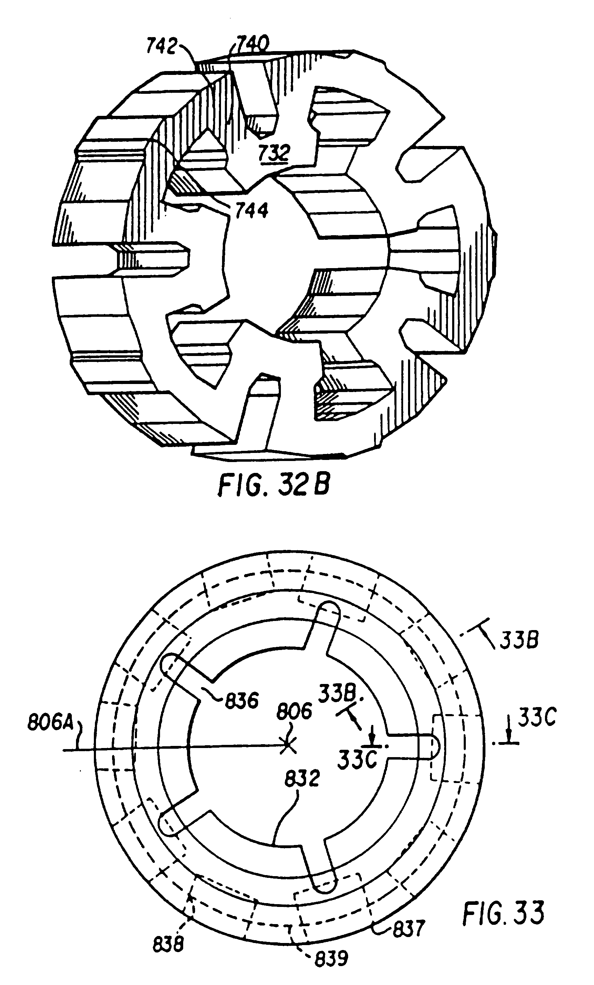

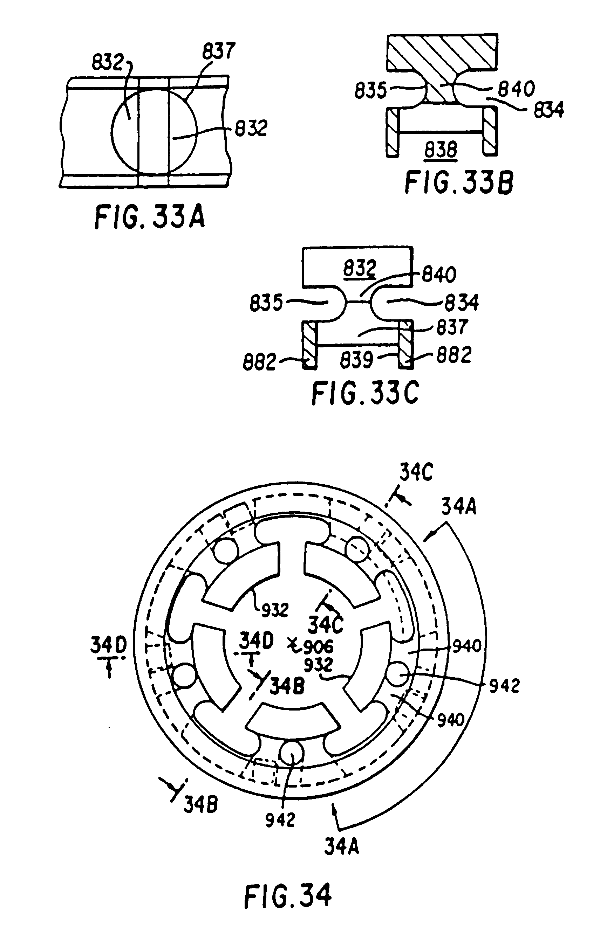

Figure 33 illustrates a journal bearing construction . Like the bearing of Figure 32, the bearing of Figure 33 is formed by proportionately large grooves and bores. In particular, a plurality of equally spaced radially extending circumferential grooves define a plurality of circumferentially spaced bearing pads 832. The bearing pads 032 are further defined by a pair of axially extending circumferential grooves which extend symmetrically from the planar faces of the cylindrical blank and are best seen in Figures 33B and 336 in which the grooves are indicated by the reference numerals 834 and 835. The bearing support structure is defined by the aforementioned structural features and by a plurality of Circumferentially spaced symmetrically disposed shallow bores 838 and a plurality of circumferentially spaced symmetrically disposed deep bores 837. Because of the presence of the "hidden" bores 837, 838, the bearing construction of Figure 33 is not extrudable and not moldable in a simple two-piece mold, i.e., easily moldable.

As best shown in Figure 33A, the deep bores 837 intersect the axial grooves 836 so as to define support structures for each bearing pad. The support structure is further defined by a circumferential groove 839 extending from the outer periphery of the cylindrical blank.

With reference to Figures 33-33C, it will be understood that the provision of the structural members as discussed above provides a support structure for the bearing pad 832 which includes a beam 840 directly supporting the pad, i.e. a primary support structure. Two continuous beams 882, i.e. a tertiary support structure and a secondary support structure comprising a plurality of beams defined in part by bores 837 and 838 connecting the beam 840 to the continuous beams 882.

Because the support structure of the bearing illustrated in Figures 33-33C is nonsymmetrical about the pad center line 806A extending from the major axis 806, it is unidirectional. Further, like the bearing of Figure 32, this bearing is particularly well suited to applications requiring extremely small bearings since the proportionately larger grooves and bores which define this bearing and its support structure are more easily manufactured.

Figure 33D illustrates a bearing of the type shown in Figures 33 and 33C in a sealed bearing unit. As shown therein, the continuous beams 882 of the bearing are secured to the static housing portion 2. The bearing pads 832 are adapted to support a rotating surface of the rotating housing portion 3. The bearing is surrounded by hydrodynamic fluid 4 and seals 7 seal the static 2 and rotating 3 housing portions with respect to one another. As described above, the static housing portion 2 is secured to and functions as a portion of the static shaft housing and the rotatable housing portion 3 is secured to the shaft 5 and functions as an extension of the shaft 5. Thus, when the shaft 5 rotates, the housing portion 3 rotates relative to the housing portion 2 and the bearing connected thereto. In this way, the shaft is supported for rotation by the bearing through the rotatable housing portion 3.

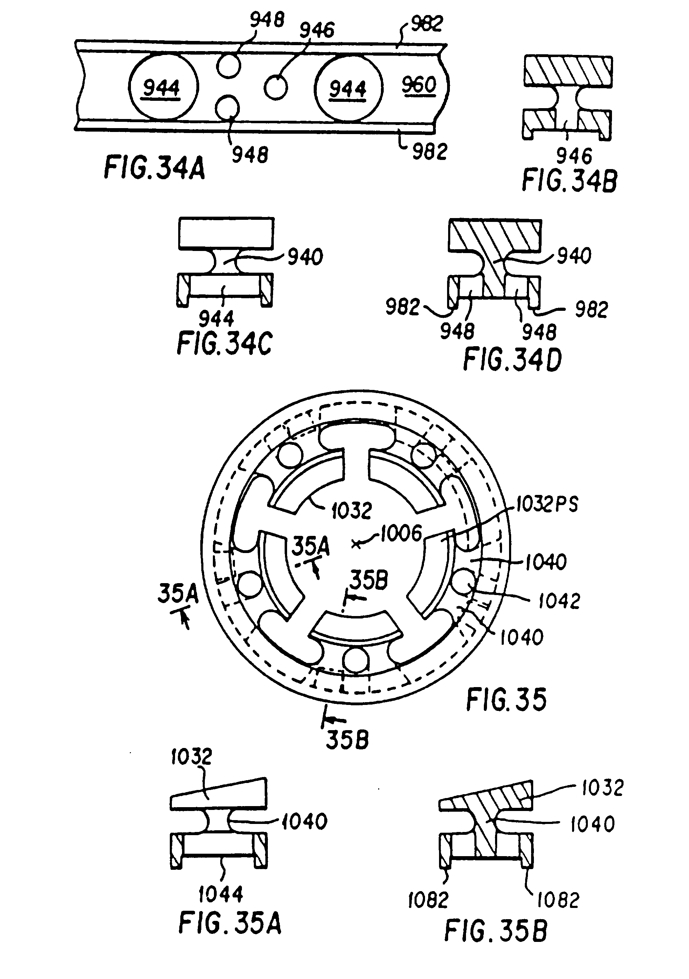

Figures 34 and 34A-34D illustrate another journal bearing construction . The bearing construction of Figure 34 is similar to that of Figure 33 insofar as the bearing pads and their support structures are defined by proportionately large grooves and bores as shown in the drawings. The support structure for the bearing pads 932 is like the support structure for the bearing pads 832. In particular, while the support structure for each of the bearing pads 932 is identical, the support structure is not symmetrical with respect to each bearing pad. Hence, the bearing Illustrated in Figure 34 is unidirectional. Moreover, because the support structure includes "hidden" openings, the bearing is neither extrudable or moldable in a simple two-piece mold.

As shown in the drawings, the bearing support structure includes a primary support structure comprising a pair of beam-like members 940 which are connected to the bearing pads 932 and defined in part by symmetrically disposed openings 942. A shallow circumferential groove formed on the outer periphery of the bearing defines a tertiary support structure comprising a pair of continuous beam-like elements 982. A secondary support structure comprising a beam and membrane network 960 for connecting the beams 940 to the continuous beams 982 is defined by the provision of a plurality of large symmetrically disposed bores 944, the provision of smaller symmetrically disposed bores 946 and the provision of small non-symmetrically disposed bores 948. By virtue of the provision of the non-symmetrically disposed bores 948, the support structure is more flexible, and thus biased, in the direction of those bores.

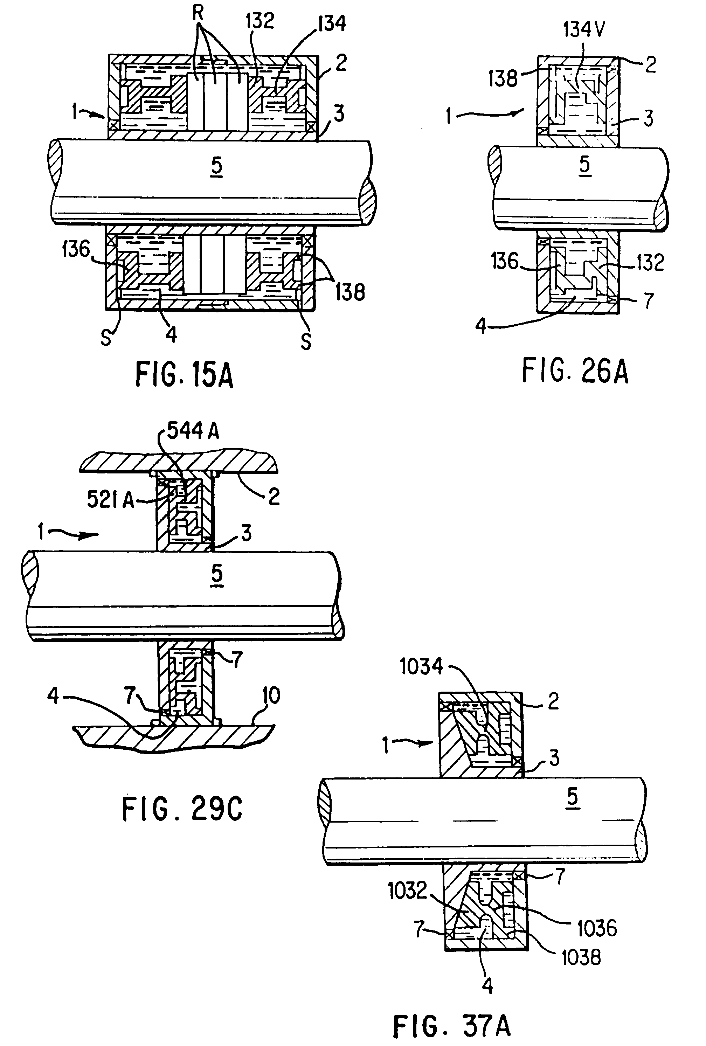

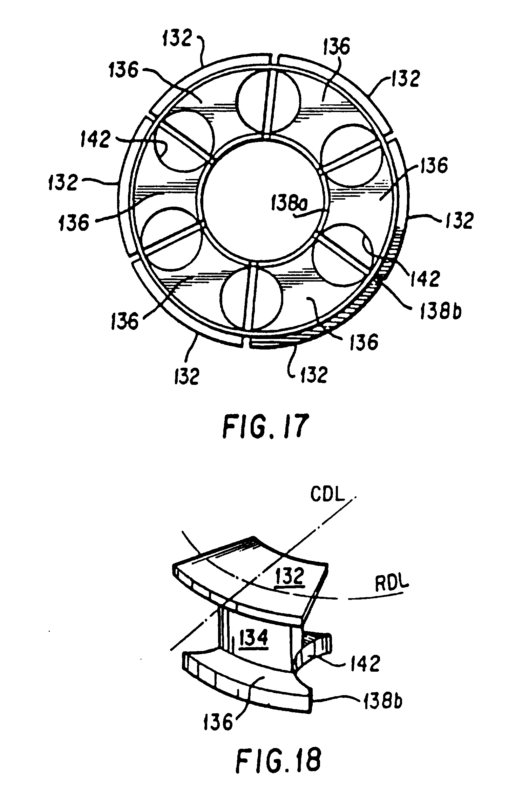

Figures 15-18 illustrate a unitary hydrodynamic thrust bearing. As noted earlier, thrust bearings incorporate some of the same features as journal bearings. For instance, like journal bearings, the thrust bearings have a major axis defined as the central axis of the blank from which the bearing is formed. Also the bearing pads have a circumferential center line extending radially from the major axis through the geometric center of the pad. When the thrust bearing is symmetrical about its circumferential center line it is bidirectional; when the bearing is non-symmetrical about its circumferential center lines, it is undirectional. However, by nature of their different function, the thrust bearings have a slightly different configuration. For example, the thrust bearing shown in Figures 15-18 includes a plurality of bearing pads 132 of substantially identical configuration. Figure 18 shows the circumferential dividing line CDL and radial dividing line RDL of the bearing pad 132. The bearing pad surfaces of the bearing pads 132 lie in a plane which is essentially transverse to the axis of the shaft to be supported and the bearing's major axis. Of course, when the pad surfaces are deflected under load, or if it is desired that the bearing be skewed slightly so as to contact the shaft in the installed or static state, the surface of the bearing pads may be somewhat nonplanar and somewhat skewed with respect to the major axis or the axis of the shaft to be supported.

A particularly important consideration in the design of thrust bearings is the prevention of fluid leakage. To a large extent this objective is achieved by designing the support structures such that under load the inner edge of the bearing pads deflect downward (as viewed in Figure 16) and the outer edge deflects upwardly. All of the thrust bearings described herein are designed in this manner. For instance, in the bearing shown in Figure 16, the beam 134 is connected to the pad 132 at a pad support surface 134ps which is closer to the outer edge of the bearing pad than it is to the inner edge of the bearing pad. Thus, the pad support surface 134ps is located radially outward of the radial dividing line RDL shown in Figure 18. Hence, the bearing is designed such that, under load, the inner edge of the bearing deflects downward.

As noted above, the pad shape and/or deflection characteristics can be forcibly altered. For example, the piezoelectric elements can be used to forcibly alter the shape or deflection characteristics of the bearing. In the case of a thrust bearing, piezoelectric elements can be used to cause downward deflection of the bearing pads. If desired, a piezoelectric element support (not shown) could be provided within the support structure.

In operation, the downward deflection of the inner edge of the bearing pad corresponds to deflection away from the shaft supported and the upward deflection of the outer edge of the bearing pad corresponds to deflection toward the shaft. The deflected orientation of the bearing pad significantly inhibits the loss of fluid which otherwise occurs as a result of centrifugal forces acting on the fluid.

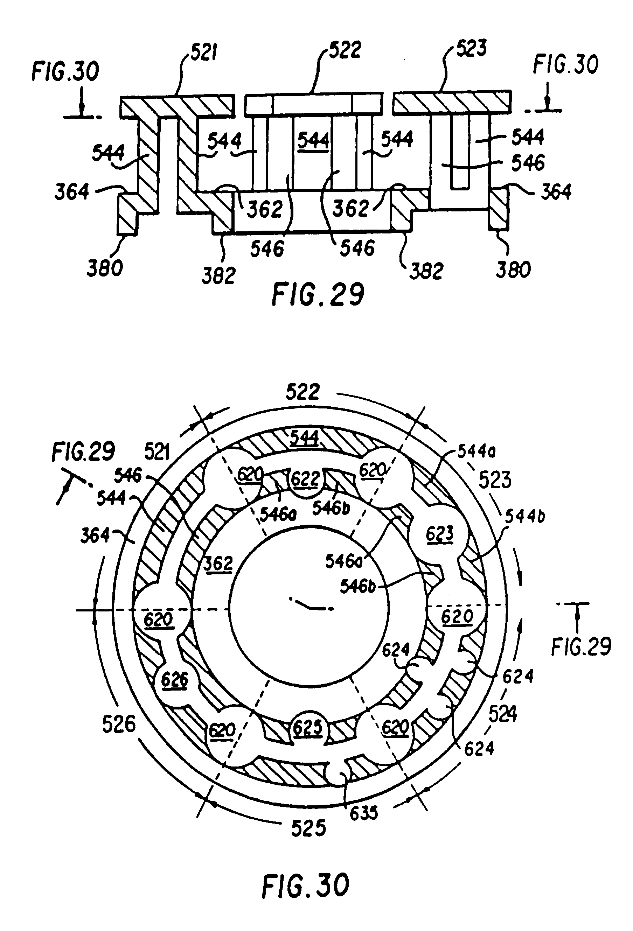

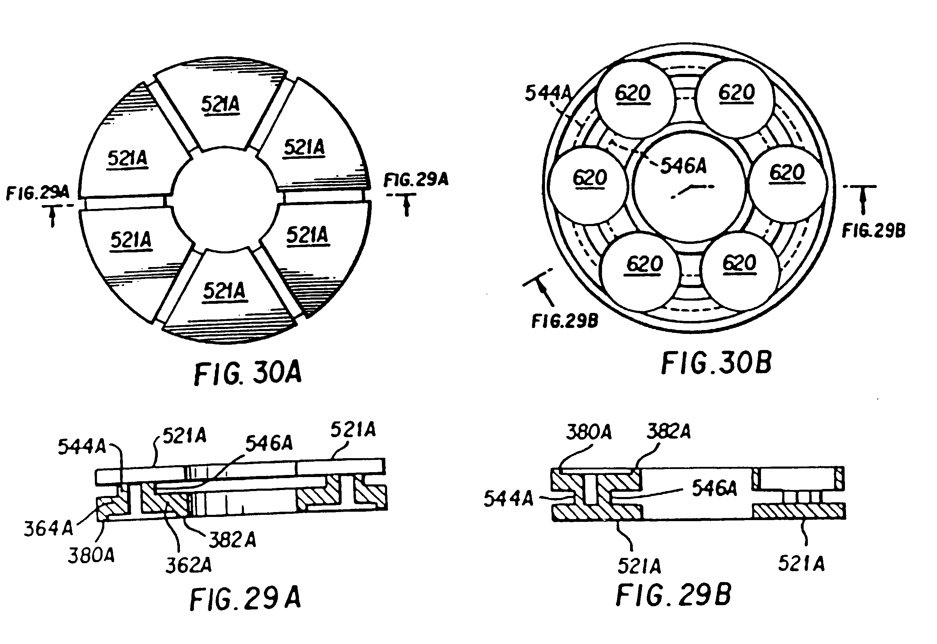

The loss of hydrodynamic fluid can be further reduced by supporting the bearing pad such that, under load, the bearing pad deforms to form a lubricant retaining pocket. Generally, such support is achieved when the bearing pad is supported by a plurality of radially or circumferentially spaced beams and the region between the beams is not directly supported such that the unsupported central region of the pad will tend to deform outwardly so as to form a fluid retaining channel. Figure 29, which is discussed below, illustrates an example of a bearing having the requisite radially spaced beams therein. A greater pocket is obtained when beams are spaced further apart. In a similar manner, a channel can be formed in a journal bearing by providing axially or circumferentially spaced beam supports and an unsupported region between the beams. Also, piezoelectric elements or other separate means can be used to form or assist in forming fluid retaining pockets.

As best shown in Figures 15 and 16, each bearing pad has a chamfer or bevelled edge 132b around its entire periphery. The purpose of the chamfer is reduce entrance and exit lubricant losses.

Each of the bearing pads 132 is supported by primary support portion, which in the illustrated embodiment comprise a beam-like support member 134 supporting the pad at a bearing pad support surface 134ps. Each beam 134 is in turn supported by a secondary support portion such as a beam supported beam or membrane 136. The beam or membrane 136 is in turn supported by a tertiary support member such as pair of beam-like legs 138a, 138b.

By providing holes or openings 142 in the beam or membrane portion 136, the continuous membrane 136 becomes a set of beams 136. Naturally, if holes or openings 142 are not provided in the membrane 136, the membrane functions as a continuous membrane. Alternatively, the inner beam-like leg 138a could be replaced with short stub-like beams or even eliminated to define a tertiary support such that the secondary support is supported in a cantilever fashion. Finally, because the holes and openings are symmetrically disposed with respect to the major axis, the bearing is symmetrical about the major axis and is therefore bidirectional.

As shown in Figures 15, 17 and 18 the holes or openings 142 which divide the continuous membrane into separate beams are round. The use of round openings facilitates manufacture of the bearing prototype because circular openings can easily be drilled into the bearing material. This is true of all the bearings described herein. Once such circular openings are provided, it may also be advantageous to extend the openings past the beam or membrane member 136 to the lower portion of the bearing pads 132 so as to define the beam-like members 134. This is why in Figure 15, the cross-section of the pad support surface 134ps and consequently the side walls of the beam 134 have an arcuate appearance.

Although the shape of the beam members may be dictated by manufacturing convenience, the shape also affects the performance of the individual bearings. Thus, although the specific shape of the bearings described herein, including the thrust bearing shown in Figures 15-18, is primarily attributable to the ease of manufacturing a prototype, it is also has been found to yield excellent results for a specific application. Any changes in the shape would, of course, influence the performance characteristics of the bearing by, for example, altering the bending or twisting characteristics of the beams which support the bearing pad. Thus, while other shapes of beams, pads and membranes are certainly contemplated, both the ease of manufacturing and the effect of the beam pad or membrane's shape on bearing performance must be considered.

Figure 15A illustrates two bearings of the type shown in Figures 15 - 18 in a sealed bearing unit. As shown therein, the beam like legs 138 of the bearings are secured to a static housing portion 2. The rotating housing portion 3 includes a thrust runner 3R formed integrally therewith or rotatably connected thereto by splines, threads or the like. The bearing pads are adapted to support opposite surfaces of the rotating thrust runner 3R of the housing portion 3. The bearings are surrounded by hydrodynamic fluid 4 and seals 7 seal the static 2 and rotating 3 housing portions with respect to one another. As described above, the static housing portion 2 is secured to and functions as a portion of the static shaft housing and the rotatable housing portion 3 is secured to the shaft 5 and functions as an extension of the shaft 5. Thus, when the shaft 5 rotates, the housing portion 3 rotates relative to the housing portion 2 and the bearings connected thereto. In this way, the bearings absorb thrust loads acting on the shaft through the shaft runner. Of course, it is possible to enclose a single thrust bearing within the housing, if thrust support in one direction is sufficient.

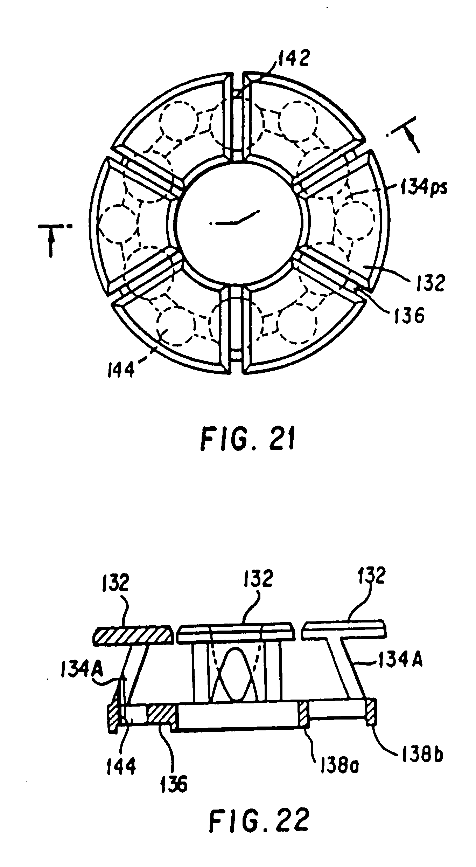

Examples of other thrust bearing shapes are shown in Figures 21-30 and 38-39. The difference between these bearings and the bearing construction shown in Figures 15-18 primarily resides in different constructions of the primary support portion, the secondary support portion and the tertiary support portion.

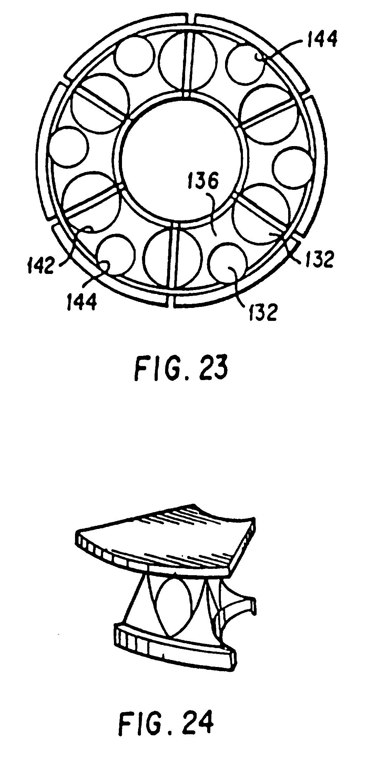

One such other bearing shape is illustrated in Figures 21-24. A top view of the bearing is shown in Figure 21; a cross-section of the bearing is shown in Figure 22; a bottom view of the bearing is shown in Figure 23 and a perspective view of the bearing is shown in Figure 24. The bearing shown in Figures 21-24 is similar to the bearing of Figures 15-18 with two notable exceptions. First, the bearing of Figures 21-24 includes an angled or slanted support beam 134A rather than a vertical support beam as in Figure 15. Second, the bearing includes additional holes 144 which extend through the support beam 136 to form a cylindrical opening through the slanted or angled beam 134 so as to form elliptical openings in the support beam. The elliptical openings divide the beam into a pair of complex ligaments, the shape of which can be appreciated with reference to the perspective view of Figure 24. The provision of the openings 144 and consequent division of the slanted or angled beams 134A into complex ligaments significantly increases the flexibility of the support structure of the bearing shown in Figures 21-24 as compared to the bearings shown in Figures 15-18. Thus, the pads 132 of the bearing of Figures 21-24 deflect to form a hydrodynamic wedge in response to a lighter load than do the pads 132 of the bearing shown in Figures 15-18. It follows that the bearing shown in Figures 21-24 is more well suited for supporting light loads and the bearing shown in Figures 15-18 is more well suited for carrying heavier loads. Further, the provision of angled or slanted support beams such as beam 134A, with or without openings to divide the beam into complex ligaments, increases the flexibility of the pad in the vertical direction since a vertically applied load creates a moment which tends to cause the beam to deflect toward the center or inner diameter of the bearing and thereby eliminate centrifugal leakage of the lubricating fluid.

Figure 23A shows a bottom view of a bearing of the type shown in Figures 21-24 in which additional holes 146 are formed in the membrane or support beam 136 to enhance the flexibility of the beam or membrane 136 even further. As illustrated in Figure 23A, the holes 146 are formed nonsymmetrically with respect to each bearing segment. The provision of these holes in such a nonsymmetrical fashion results in a bearing in which the pads tend to deflect more easily in one direction than in the other direction. In other words, the bearing pads are biased in one direction by the provision of nonsymmetrical openings in the support structure. Naturally, such nonsymmetrically disposed openings can be provided in any of the bearing constructions described herein in which it is desired to bias the bearing pads in one direction. It may even be desirable to provide the nonsymmetrically disposed openings or holes such that only selected ones of the bearing pads are biased.

Figure 25 is a cross-sectional view of another bearing. In accordance with this construction, the bearing pad 132 is supported on a pad support stub 1345 which is in turn supported on a horizontally oriented beam portion 134H which is in turn supported on an inversely angled beam portion 1341. In other respects, the construction is similar to that of the previously described bearings. By virtue of this construction, the bearing has a great deal of flexibility in one direction but it is extremely rigid in the opposite direction. A piezoelectric element 100 may be located between the horizontal beam portion and the pad as shown.

A similar construction is illustrated in Figure 26. The difference between the bearing illustrated in Figure 26 and the bearing illustrated in Figure 25 is that the bearing illustrated in Figure 26 uses a vertical beam portion 134V rather than an inversely angled beam portion 134I. The bearings are similar in all other respects. The absence of an angled beam in the bearing of Figure 26 tends to give the bearing more rigidity in the vertical direction.

Figure 26A illustrates a bearing of the type shown in Figure 26 in a sealed bearing unit. As shown therein, the circumferential legs or beams of the bearing are secured to a static housing portion 2. The bearing pads are adapted to support a rotating surface of the rotating housing portion 3. The bearing is surrounded by hydrodynamic fluid 4 and seals 7 seal the static 2 and rotating 3 housing portions with respect to one another. As described above, the static housing portion 2 is secured to and functions as a portion of the static shaft housing and the rotatable housing portion 3 is secured to the shaft 5 and functions as an extension of the shaft 5. Thus, when the shaft 5 rotates, the housing portion 3 rotates relative to the housing portion 2 and the bearing connected thereto. In this way, the bearing provides thrust support for the shaft through the rotating housing portion 3.

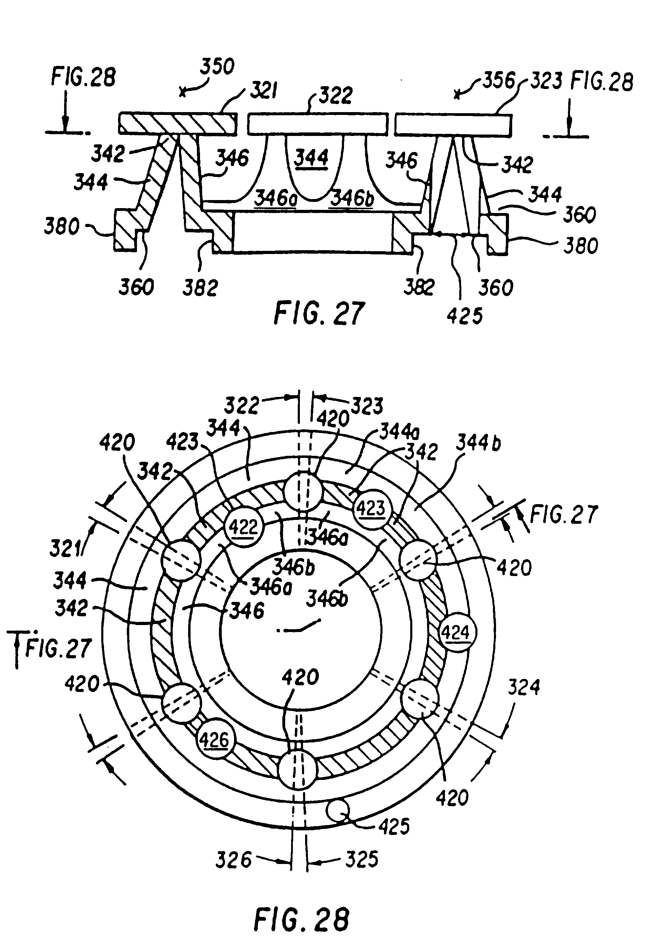

Figures 27-28 illustrate another embodiment of the bearing construction.

As shown in the drawings, this bearing includes a plurality of bearing pads 321-326 (shown in phantom in Figure 28). Each of the bearing pads 321-326 are supported on a pad support surface 342 of a bearing support structure. The bearing support structure includes a primary support portion composed of a pair of nested frustums supported on a secondary support portion which includes a split peripheral membrane 360 which is supported on a tertiary support portion which includes a pair of peripheral beams 382. The peripheral beams 380 and 382 are similar to those of the previously described constructions. The membrane 360 differs from the membrane in previously described constructions since the membrane 360 is radially split by the groove formed in the bottom of the bearing support structure which forms the nested frustums. The inner frustum is inverted with respect to the outer frustum such that the mean center lines of the frustums merge at a point 350 above the pad support surface 342 and have a cross-section which appears similar to an inverted V. Since the center lines of the frustums intersect at point 350 above the pad surface, the primary support structure supports the bearing pad for pivoting about a point above the pad surface. This ensures proper deflection.

The beams 346 and 344 which support the bearing pad can be angled toward one another at the same angle, angled toward one another at different angles, one beam angled and one beam not angled, and angled in the same direction. Of course, variations in the degree of angling of the beams in the primary support structure impacts the deflection characteristics of the bearing.

A plurality of holes or openings 420 disposed symmetrically about the bearing support structure divide the nested frustum or inverted V structure into a plurality of support beams 344, 346 and divide the apex of the nested frustums so as to define the pad support surfaces 342. Thus, for example, the bearing pad 321 is supported on a pad support surface 342 by a pair of complex support beams 344 and 346 which are tapered toward one another and have a complex geometrical configuration defined by the cylindrical extending openings passing through the nested frustum section. As best shown in Figure 27, the center lines of the beams 344 and 346 intersect at a point 350 above the pad surface to ensure proper pivoting support. The individual beams 344 and 346 are supported on a peripheral membrane 360 which is split by the groove which defines the frustums. The membrane is supported by peripheral beams 380, 382. As discussed above, the peripheral beams 380, 382 and the peripheral membrane 360 can be circumferentially split to define individual beam supports.

Numerous modifications to the bearing support structure are possible. For example, deflection of the support structure can be modified by changing the angle of the beams, changing the location of the holes or openings which define the legs, varying the length of any of the beams or membranes, and changing the width or thickness of any of the beams or membranes. In order to illustrate a number of these possibilities, Figures 27 and 28 depict a 5 different support structure for each of the bearing pads 321-326. It should be understood that these various support structures are shown in a single bearing for purposes of illustration. In normal use, each of the bearing pads 321-326 would have a similar, though not necessarily identical, support structure to assure uniform performance.

The support structure for bearing pad 322 differs from that of bearing pad 321 by virtue of the provision of a hole or opening 422 which extends through the beam 346 so as to divide the beam 346 into a plurality of beams or sub-beams 346(a) and 346(b). If, like the opening 422, the diameter and positioning of the opening is such that the beam is completely separated, the beam is divided into separate beams. On the other hand, if the opening only partially separates the beam (e.g. opening 423) the beam is divided into sub-beams. As shown in Figure 27, the opening 422 forms an elliptical opening in the side of the beam 346 such that as viewed in Figure 27, radially outer beam 344 is visible. By virtue of this construction, the pad 322 is supported by three angled ligaments or beams, 344, 346(A) and 346(B).

Bearing pad 323 is supported by four angled beams or ligaments 344(a), 344(b) , 346(a) and 346(b). This structure is achieved by providing a hole or opening 423 which extends through both beam 344 and beam 346 and divides the pad support surface 342 into two sections.

It should be noted that with respect to all of the modifications discussed herein, the size of the openings should be selected based upon the degree to which the beams 344 and 346 are to be divided into-separate beams. In some instances, it may be desirable to completely separate the beam sections in which case a larger opening would be used. In other instances, such as that illustrated with respect to the support of bearing pad 323, it is desirable to subdivide the beam at some point along the sidewall of the beam. It should also be noted that although the drawings only show the provision of one opening for bearing pad support structure to divide the beams 344 and 346. It is possible that two or more openings similar to that of the openings 422-426 shown in Figure 28 could be provided so as to divide the beams 344, 346 into three or more beams or sub-beams. As always, a determination of the type of support to be employed depends on the desired performance characteristics. Generally, dividing the beams into separate beams or sub-beams makes the support structure more flexible. By making the support structure more flexible in one direction as with the support structure for bearing pads 322, 324 and 326 the bearing pads are biased in a predetermined direction.

The support structure for bearing pad 324 is similar to that for bearing pad 322 except that the opening 424 extends through the outer support beam 344 rather than the inner support beam 346. Thus, like the bearing pad 322, the bearing pad 324 is supported by three angled legs.

The support structure for bearing pad 325 is similar to that for bearing pad 321 except that an opening 425 is provided through the outer peripheral beam 380 and peripheral membrane 360 in a nonsymmetrical position. Thus, the bearing pad 325 is biased in a predetermined direction, i.e., the direction of greatest flexibility caused by the provision of the opening 425.

The support structure for the bearing pad 326 is similar to that of bearing pad 322 except that the opening 426 which divides the beam 346 is provided in a non-symmetrical fashion so as to bias a bearing pad 326 in the direction of greater flexibility, i.e., the direction of the smaller, more flexible beam.

Naturally, any combination of the support structures illustrated in Figures 27, 28 could be employed to achieve desired performance characteristics.

Figures 29-30 illustrates another embodiment of the bearing. As shown in the drawings, this bearing includes a plurality of bearing pads 521-526 (location shown in phantom in Figure 30). Each of the bearing pads 521-526 are unitary with, and supported on, a bearing pad support structure. Generally, the bearing pad support structure includes at least a primary support structure including an inner circumferential support beam 546 and an outer circumferential -support beam 544, a secondary support portion including an inner peripheral membrane 362 and a tertiary support portion including an outer peripheral membrane 364 and an inner peripheral support beam 382 and an outer peripheral support beam 380. As best shown in Figure 29, the circumferential support beams 544, 546 are defined in part by a deep circumferential channel extending from the bottom of the bearing to the bearing pad. The support beams are further defined by a plurality of holes or openings 620 disposed symmetrically about the bearing pad support structure which separate the beams 544, 546 from adjacent beams. Thus, for example, the bearing pad 521 is supported on a pair of beams 544 and 546 which beams have generally arcuate side walls. As mentioned earlier, the beam support structure also includes membranes 364, 362 and peripheral beams 380, 382.

Numerous modifications to the bearing support structure are possible. In order to illustrate a number of these possibilities, Figures 29 and 30 depict a different support structure for each of the bearing pads 521-526. As with the previously described embodiment of Figures 27-28, these various support structures are shown in a single bearing for the purpose of illustration . In normal use, each of bearing pads 521-526 would have a similar, though not necessarily identical, support structure to assure uniform performance.

The support structure for bearing pad 522 differs from that of bearing pad 521 by virtue of the provision of a hole or opening 622 which extends through the inner circumferential beam 546 so as to divide the beam 546 into a plurality of beams 546a and 546b. By virtue of this construction, the pad 522 is supported by three vertically extending beams or ligaments 544, 546a and 546b.

The bearing pad 523 is supported by four vertically extending beams or ligaments 544a, 544b 546a and 546b. This structure is achieved by providing a hole or opening 623 which extends through both beam 544 and beam 546. The thinner beams which result from this modification would naturally have greater flexibility than the support structure for bearing pads 522 and 521.

The bearing pad 524 is supported by five relatively thin vertically extending beams or ligaments. This structure is achieved by providing a hole or opening 624 to divide the inner beam 546 into two beams and providing two holes 624 to divide the outer beam 544 into three beams.

The support structure for bearing pad 525 is similar to that for bearing pad 522 except that an additional opening 635 non-symmetrically divides the outer beam 544 into two beams. By virtue of the non-symmetrical division of the outer beam 544, the bearing pad is biased in the direction of greater flexibility.

The support structure for bearing pad 526 is similar to that for bearing pad 522 except that the outer beam 544 is split rather than the inner beam 546. Further, the opening 626 is somewhat larger than the opening 622 such that a groove is formed on the outer periphery of the inner beam 546 so as to make the inner beam 546 somewhat more flexible.

Naturally, any combination of the support structures illustrated in Figures 29, 30 could be employed to achieve desired performance characteristics.

Figures 29A, 29B, 30A and 30B illustrate in detail a thrust bearing in which each of the bearing pads 521A of the support structure are very similar to that used to support bearing pad 521 in Figures 29 and 30. The bearing construction is different, however, insofar as the beams 544A and 546A are circumferentially narrower and vertically shorter than their counterparts in the bearing illustrated in Figures 29 and 30. Naturally, shorter beams are more rigid than the comparatively longer beams and narrow beams are less rigid than comparatively wider beams. Moreover, the beam 544A is radially narrower than the beam 546A; whereas in the bearing illustrated in Figures 29 and 30, the beams 544 and 546 have equal widths. The difference in radial thickness is compensated for since the large opening 620 which defines the circumferential extent of the beams 544A and 546A is arranged such that beam 544A is significantly wider in the circumferential direction than is beam 546A. Finally, it should be noted that the openings 620 are significantly larger than the corresponding openings 620 in the bearing construction of Figures 29 and 30. Naturally, the larger openings increases the flexibility of the support structure defined thereby.

Figure 29C illustrates a bearing of the type shown in Figures 29A and 29B in a sealed bearing unit. As shown therein, the legs 380A, 382A of the bearing are secured to a static housing portion 2. The bearing pads 321A are adapted to support a rotating surface of the rotating housing portion 3. The bearing is surrounded by hydrodynamic fluid 4 and seals 7 seal the static 2 and rotating 3 housing portions with respect to one another. As described above, the static housing portion 2 is secured to and functions as a portion of the static shaft housing 10 and the rotatable housing portion 3 is secured to the shaft 5 and functions as an extension of the shaft 5. Thus, when the shaft 5 rotates, the housing portion 3 rotates relative to the housing portion 2 and the bearing connected thereto. In this way, the thrust of the shaft is supported by the bearing through the rotatable housing portion.

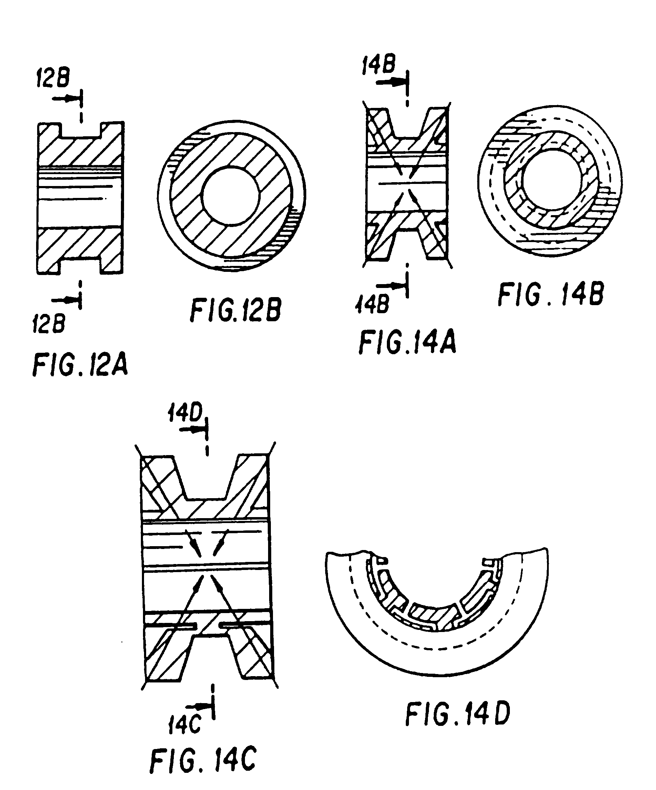

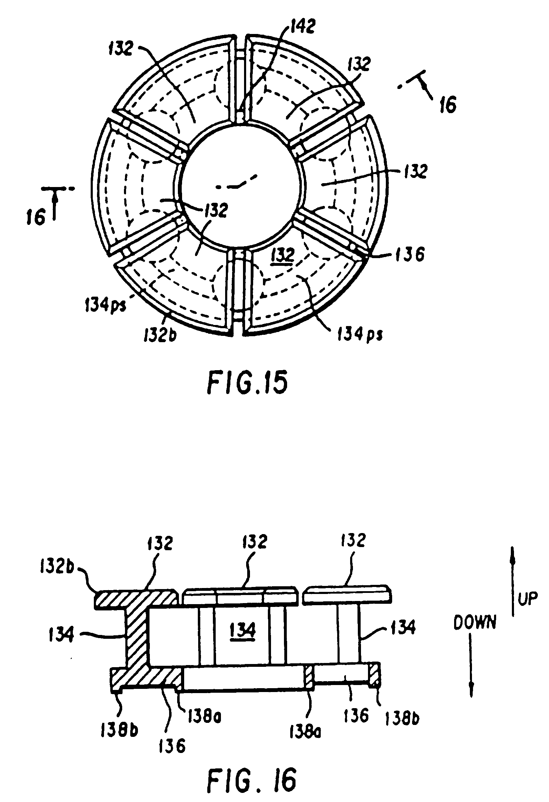

Figures 35-37 illustrates a combined thrust and radial hydrodynamic bearing . The bearing illustrated in Figure 35 is quite similar to the bearing illustrated in Figure 34 and similar numerals are used to designate similar structure. Similarly, as viewed in the cross-section in Figure 37, the bearing of Figures 36-37 is somewhat similar to the radial bearings illustrated in Figures 4 and 14P except that the bearing pad 1032 and the bearing pad support structure, which includes beams and/or membranes 1034, 1036 and 1038, are defined by proportionately larger slits and grooves. However, the radial-thrust bearings differ from radial-only bearings in that the bearing pad surface 1032ps is angled with respect to the major axis 1006. By virtue of its angled pad surface, the bearings of Figures 3537 support loads acting both along the major axis 1006 and radially from the axis 1006. A piezoelectric element 100 may be provided as shown to allow selective adjustments of the deflection characteristics of the bearing.

In order to be supported by the angled pad support face 1032ps, the shaft must be fitted with a runner which is angled at a angle complementary to the angle of 2 the pad support face. The portion of the axial load the bearing and the portion of the radial load taken by the bearing depends on the angle of the pad surface 1032ps. If the pad is angled at an angle $\alpha$ with respect to the major axis 1006, the axial load applied to the bearing can be determined by the following equation:

Applied Axial Load = Total Axial Load (sin $\alpha$).

Similarly, the radial load applied to the bearing can be determined by the following equation:

Applied Radial Load = Total Radial Load (Cos $\alpha$).

The support structure for the bearing shown in Figure 35 is similar to the support structure for the bearing shown in Figure 34.

The support structure for the bearing illustrated in Figures 36 and 37 includes a primary support structure for the spaced bearing pads 1032 having a beam 1034 which supports the bearing pad 1032, a tertiary support structure which comprises a pair of circumferential beams 1038 which may be continuous. The secondary support structure comprises a membrane 1036 or a network of beams 1036 for connecting beam 1034 to the beams 1038. As shown most clearly in Figure 36, the support structure for each of the plurality of bearing pads 1032 is nonsymmetrical. Accordingly, the bearing illustrated in Figures 36 and 37 is unidirectional.

Figure 37A illustrates a bearing of the type shown in Figure 37 in a sealed bearing unit. As shown therein, the legs 1038 of the bearing are secured to a static housing portion 2. The bearing pads 1032 are adapted to support an inclined rotating surface of the rotating housing portion 3. The bearing is surrounded by hydrodynamic fluid 4 and seals 7 seal the static 2 and rotating 3 housing portions with respect to one another. As described above, the static housing portion 2 is secured to and functions as a portion of the static shaft housing and the rotatable housing portion 3 is secured to the shaft 5 and functions as an extension of the shaft 5. Thus, when the shaft 5 rotates the housing portion 3 rotates relative to the housing portion 2 and the bearing connected thereto. In this way the bearing supports the shaft both axially and radially through the inclined housing portion.

Generally, any of the general bearing constructions described in this application can be employed in the design of combined radial-thrust bearings of the type illustrated in Figures 36 and 37. Of course in order to achieve the combined radial and thrust bearing characteristic, the bearing pad surface must be angled at an angle between 0 and 90 degrees with respect to the major axis. Moreover, the need to accommodate both radial and axial loads necessarily will impact the design of the bearing pad support structure.

Another form of combined radial-thrust bearing is shown in Figures 43 and 43A. As shown therein, the bearing is formed by assembling discrete bearing components. Generally, a combined radial-thrust bearing of this type includes a carrier having two axial faces, an inner periphery and an outer periphery adapted for mounting in a housing. At least one radial bearing RB is supported on, connected to, or integral with the inner periphery of the carrier to provide radial shaft support. A number of circumferentially spaced openings are formed on at least one of the two axial faces of the carrier. A plurality of bearing pads are located in these openings. In this way, a thrust face is provided on the bearing.

In the specific example illustrated in Figures 43 and 43A, the bearing includes two radial bearings RB of the type shown in Figure 8 and discussed above. As noted above, this type of bearing provides bidirectional support. Of course, any of the hydrodynamic bearings as described , unidirectional or bidirectional could be used. As shown, the radial bearings are separate elements supported by the carrier 110. The bearings could also be formed integrally with the carrier 110 or locked thereto. The thrust pads 112 can be of the type described in connection with Figure 42 discussed below. Specifically, the pads include a pad 114, a primary support portion 116, a secondary support portion 118, and a tertiary support portion 120. The primary support portion 116 can be a plurality of inclined legs or a single hollow conically (or, more accurately, frustum) shaped element. Likewise, the secondary 118 and tertiary 120 support portions can be continuous or divided into individual members.

A further aspect is the disclosure of machinable bearing shapes. In other words, bearing shapes which can be produced by machining a piece of heavy walled tubing or similar cylindrical journal using standardly available machining techniques. Such bearings are characterized by the fact that they are formed from a piece of heavy walled tubing or similar cylindrical journal through the provision of bores, slits and grooves. The advantage of such bearings is that it is easy to manufacture prototypes and to modify these prototypes after testing. Naturally, when the bearings are to be mass produced, using, for example, molding or casting techniques, different manufacturing considerations may dictate different shapes. It is important to recognize that changes in shape affect bearing performance.

Another manufacturing consideration is ease of molding. Naturally, most of the bearing constructions described are capable of being molded by some molding technique. However, only certain shapes can be injection molded in a simple two-piece mold, i.e., a mold which does not include cams. Another advantage of the bearings described is that the bearings can be constructed with easily moldable shapes which are defined as shapes which can be injection molded using a simple two-piece mold. An easily moldable shape generally is characterized by the absence of "hidden" cavities which require cams for molding. For instance, with respect to radial bearings, an easily moldable shape includes no radially extending grooves in the inner and outer diameter and a continuous axial cross section. The bearing shown in Figures 32, 32A and 32B is an example of an example of an easily moldable radial or journal bearing.

Similarly, easily moldable thrust bearings are characterized by the fact that they can be molded with a single seam line such that, for example, when viewed only from the top and bottom, all surfaces are visible.

Figures 38A-38C illustrates an easily moldable thrust bearing. The bearing includes a plurality of circumferentially spaced bearing pads 132m and a support structure supporting each of the bearing pads 132m. The support structure includes a primary support portion which includes circumferential beams 134mb and 134ma, a secondary support portion which includes radially extending beam 136m and a tertiary support portion which includes the stub-like pair of beams 138m. It should be noted that in Figures 38A-38C the dimensions of the support structure are somewhat distorted to provide clarity. For instance, as shown in Figure 38C, the circumferential beams 134ma and 134mb are shown as extremely thick. Such a beam structure would provide a very rigid support for the bearing pads 132m and in practice, such a rigid support would probably not be necessary or desirable.

Variants of the specific moldable beam structure illustrated are possible. For instance, either or both of the spaced circumferential beam segments 134ma or 134mb could be formed as a continuous circumferential beam element. Additionally, the secondary support portion could include a plurality of radially extending beams between each bearing pad 132m. Further, the primary support structure could be modified to include three or more circumferential beam segments connecting each pair of adjacent bearing pads and/or circumferential beam segments of different radial widths could be used. Further, the stub-like beam portions 138m could be provided al the radially extending edges of the beams 136 rather than the circumferentially extending ends. Finally the structure could also be varied by varying the length or thickness of any of the elements in the support structure to modify the deflection characteristics of the support structure.

In order to illustrate a number of possible support structure constructions, Figure 38D depicts a different support structure for each of the bearing pads 321m-326m. In particular, Figure 38P is a bottom view with the modifications illustrated herein. It should be understood that these various support structures are shown in a single bearing for purposes of illustration . In normal use, each of the bearing pads 321-326m would have a similar, though not necessarily identical, support structure to assure uniform performance.

The support for bearing pad 322m differs from that for the bearing pads 132m in that a oval shaped projection extends from the back of the bearing pad surface to provide a rigid support for the outer circumferential edge of the bearing pad 321m. By virtue of this construction, the bearing pad 321m would be extremely rigid at its outer circumferential end.

The support for bearing pad 322m is similar to that to 321m except that rather than a single large projection, two smaller projections 122m extend from the bottom of the bearing proximate the outer circumferential edge of the bearing pad. Like the projection 120m, these two projections 122m provide rigidity to the outer circumferential edge of the bearing pad 322m. However, this construction allows the bearing to deflect in the unsupported region between the projections.

The bearing pad 323m is supported by modified support structure which includes a continuous circumferential beam 134ma in the primary support portion. Similarly, the bearing pad 324m includes a continuous inner circumferential beam 134mb. The provision of such continuous beams increases the rigidity of the bearing support structure.

The support structure for bearing pad 325 is modified by the provision of large openings 142m in the inner beam 134mb and smaller openings 144 in the outer beam 134ma. The provisions of these openings increases the flexibility of the beams. Naturally, the larger openings increase the flexibility of the beams to a greater extent than the small openings 144. Variants of this support structure include the use of different sized openings or a different number of openings to bias the bearing pad 325m in a predetermined direction.

The bearing pad 326m is supported by a modified structure in which the primary support portion includes a membrane 134m rather than a pair of beams. In the illustrated example, one of the membranes is provided with a opening 146 to bias the bearing pad 326m in a predetermined direction. Of course, the provision of the opening 146m is not necessary and if desired, a number of openings could be provided.

As is evident from these drawings, the moldable bearings do not include any hidden cavities which would necessitate the use of a complex mold and/or a mold including a displaceable cam. In particular, since each surface of the bearing structure is directly visible in either the top view of Figure 38A or the bottom view of Figure 38B, the bearing can be simply molded using a two piece mold. Specifically, a first mold piece defines those surfaces which are directly visible only in the top view of Figure 38A. The second mold piece defines those surfaces which are only visible in the bottom view of Figure 38B. Surfaces having edges visible in both Figures 38A and 38B can be molded using either or both molds. In the illustrated bearing, easy moldability is achieved because the secondary and tertiary support portions are circumferentially located in the space between bearing pads. The modifications illustrated in Figure 38D do not alter the easy moldability of the bearing.

Figure 38E illustrates a bearing of the type shown in Figures 38A-D in a sealed bearing unit. As shown therein, the bearing is secured to a static housing portion 2. The bearing pads 232m are adapted to support a rotating surface of the rotating housing portion 3. The bearing is surrounded by hydrodynamic fluid 4 and seals 7 seal the static 2 and rotating 3 housing portions with respect to one another. As described above, the static housing portion 2 is secured to and functions as a portion of the static shaft housing and the rotatable housing portion 3 is secured to the shaft 5 and functions as an extension of the shaft 5. Thus, when the shaft 5 rotates, the housing portion 3 rotates relative to the housing portion 2 and the bearing connected thereto. In this way thrust loads on the shaft are supported by the bearing through the rotating housing portion 3.

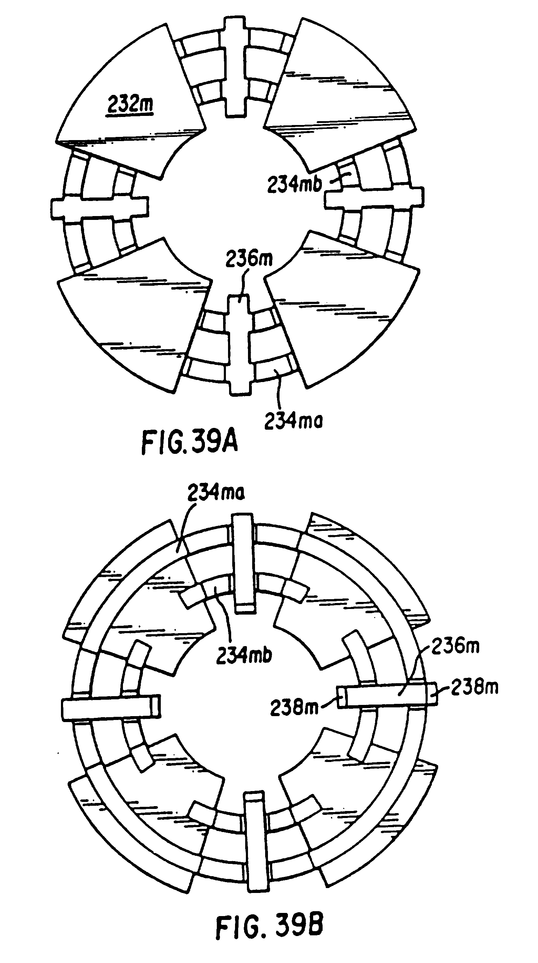

More complex variants of the moldable thrust bearing illustrated in Figures 38A-38D are possible. In particular, any of the previously discussed modifications of the bearing structure which can be adapted to easy molding could be employed. For instance, the primary support beams could be continuous. Thus, the provision of an easily moldable bearing does not necessarily require a simple bearing construction. An example of a more complex bearing structure is illustrated in Figures 39A-39c.

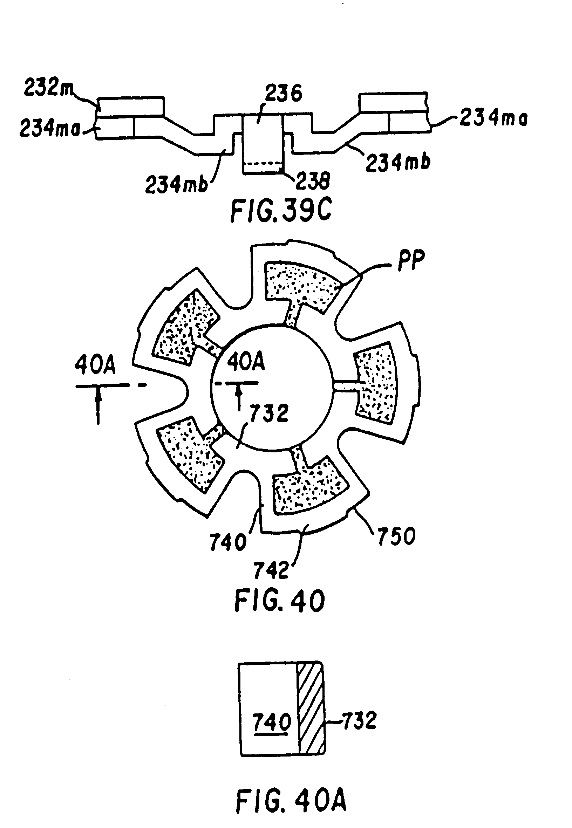

As illustrated in Figures 39A-C, the bearing includes a plurality of circumferentially spaced bearing pads 232m supported by a bearing pad support structure. The secondary and tertiary portions of the support structure are similar to corresponding portions of the bearing support structure of Figure 38. However, the bearing of Figure 39 differs from the bearing of 38 in that in the bearing of Figure 39 the primary support portion includes a plurality of complex beams 234. Specifically, each bearing pad is supported by a radially outer continuous complex circumferential beam 234ma. The pads are further supported by the plurality of spaced circumferential complex beams 234mb. The complex shapes of the continuous beam 234ma and the beam segments 234mb can be best appreciated with reference to Figure 39C which shows, somewhat schematically, the profile of the complex beams 234. In operation, the beams 234ma and 234mb function as a beam network. Thus, it can be seen that numerous complex thrust bearing constructions can be provided while retaining the ability to mold the bearing with a simple two-piece mold, i.e., easy moldability. Naturally, each structure provides unique deflection characteristics which must be considered in designing the bearing for optimum wedge formation.

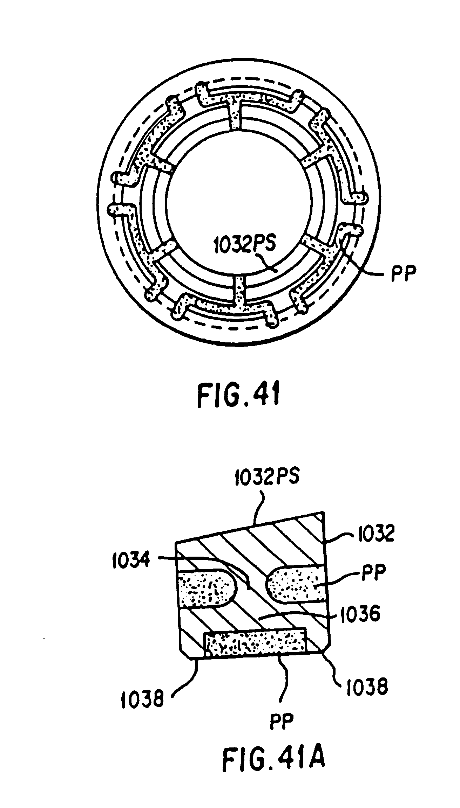

In certain gas or air lubricated deflection pad bearings, there are cases where loads or speeds exceed the capability of an air film. In these cases, it is necessary to introduce a liquid type lubricant into the converging wedge without providing a liquid reservoir or bath. Figures 40, 40A, 41 and 41A illustrate bearing constructions for achieving this purpose. In particular, these drawings illustrate a self lubricating deflection pad bearing . The bearing is essentially a deflection pad bearing of the type described herein which has been modified to include lubricating plastic in its various openings.

The plastic employed In the bearing is a conventional castable porous plastic which is capable of absorbing lubricating liquid when soaked in such a liquid. One such plastic is sold under the trade name POREX. Generally, the porous plastic can be formed from various plastics by injecting air into the plastic material to form the pores. In particular, the liquid is absorbed into the porous plastic in a wick like manner and held in place by the plastic.

The lubricating deflection pad bearing is constructed by taking a conventional journal, thrust or combined radial and thrust deflection pad bearing of the type described above and casting or injecting the conventional porous plastic around and into the spaces between the deflection members. As a consequence of this construction, during operation, the movement of the shaft and the compression of the deflection members causes the lubricating liquid to leave the porous plastic be drawn into the leading edge of the converging wedge. The formation of the liquid filled wedge greatly increases the load and speed capability of the bearing. After the liquid passes over the pad surface, it is reabsorbed by the porous plastic after leaving the trailing edge.

A further aspect is the composite structure combining a standard bearing material with the porous plastic. By virtue of this composite, it is possible to take advantage of the unique characteristics of both materials. More specifically, conventional porous plastics alone make poor deflection pad bearing materials because the pores in the plastic are actual voids that are detrimental to the development of the very thin fluid film. On the other hand, conventional plastic or metal bearing materials not having the pores are incapable of absorbing lubricant to any great extent. However, through the use of both materials in the manner described, an effective self-lubricating hydrodynamic bearing can be obtained. Further, there are synergistic results from the combined use of standard bearing material and lubricant absorbing porous plastic. For example, the deflections of the bearing surface assist in forcing the liquid lubricant into the leading edge. Moreover, channelling or lubricant retaining de formation of the bearing surface assists in containing the liquid.

Figures 40 and 41 show two examples off the self lubricating deflection pad bearing . In particular, these drawings show bearings similar to bearings described previously which have been modified to include the liquid absorbing porous plastic filled into the spaces between the deflection members. To some extent, the bearing acts as a skeletal portion and the porous plastic portion acts as a lubricant retaining and releasing sponge.

In particular, Figures 40 and 40A show a selflubricating bearing having an underlying bearing structure which is essentially identical to the bearing shown in Figures 32 and 32A. However, the bearing structure of Figure 40 is modified such that porous plastic fills the openings between the bearings and the openings within the support structure which are continuous with the spaces between the bearing pads 732. Naturally, the spaces under the bearing pads could be filled with porous plastic as well. However, unless there is communication between the porous plastic and the bearing pad surface, the provision of such porous plastic areas would be fruitless.

Likewise, Figures 41 and 41A show a bearing having a construction virtually identical to the construction of the combined radial and thrust bearing shown in Figures 36 and 37. However, porous plastic is again injected into the interstices or spaces within the support structure between the end between the pads. Again, the injection of the porous plastic as illustrated results in a bearing having a continuous inner diameter. However, like the bearing of Figure 40, the material characteristics across the inner diameter vary significantly.

Specifically, like the bearing of Figure 40, the inner diameter of the bearing of Figure 41 includes wedge supporting bearing pad surfaces and circumferentially spaced lubricant releasing and absorbing and retaining portions. In operation, the movement of the shaft and the compression of the deflection members causes the lubricating liquid to leave the porous plastic and to be drawn into the leading edge of the converging wedge. The formation of the liquid filled wedge greatly increases the load and speed capability of the bearings.

The manufacture of the self-lubricating deflection pad bearing involves three general steps. First, the basic bearing or skeletal portion is formed standard bearing material. Second, the porous plastic is injected into the desired spaces in the bearing structure. For purposes of manufacturing convenience, the plastic is in; acted to the bearing without lubricant Finally, the bearing with the porous plastic injected into the desired spaces is loaded with liquid lubricant. To properly load the plastic with liquid lubricant, it is necessary to wick the lubricant in from one side. The merging in the liquid results in an unfilled internal portion. This is caused by not allowing the pores to vent from one side. In Figure 40 the basic bearing structure is combined radial and thrust structure similar to that shown in Figure 36. However, porous plastic fills the interstices within the support structure. The provision of the porous plastic yields a composite bearing having a continuous inner diameter surface. However, the deflection characteristics cross the surface very greatly. Specifically, the deflection pads which are formed of standard bearing materials such as metal or non-porous plastic is suited for deflection and formation of a fluid wedge. On the other hand, the porous plastic portions are suited for compression so as to release lubricant at the reading edge of the bearing pads and absorbing lubricant at the trailing edge of the bearing pads.

As noted with respect to each of the illustrative examples described above, the bearings can be formed to provide for a wedge ratio of 1:2 to 1:5, have a deformable bearing surface the shape of which can be modified, allow six degrees of freedom of the pad, and provide a dash pot type damping action. The bearings are typically of a unitary construction.

By virtue of the wedge formed by deflection of the bearing pad and the ability of the pad to move with six degrees of freedom, the bearing exhibits exceptional performance characteristics. Specifically, the bearing dimensions and deflection variables including number, size, shape, location and material characteristics of the elements defined in the unitary bearing can be tailored for any specific application to support a wide variety of loads. Of these variables, the shape of the support members is particularly important. The impact of shape of the support members on the deflection characteristics of the support structure can be appreciated when the variable formula for moment of inertia $bh^3/12$ (English units) (the main component of sectional modulus for rectangular section, $z = I/c = bh^2/6$) used in an example. Moreover, the ability of the pad to move with six degrees of freedom allows the bearing to compensate for and correct shaft misalignment. In this regard it is noted that the bearings have a self correcting characteristic resulting from the tendency of the bearing to return to its non-deflected state due to the stiffness of the bearing. Of course, the stiffness of the bearing is primarily a function of the shape of the support structure, and to a lesser extent the other deflection variables including number, size, location, and material characteristics of the elements defined by the grooves and cuts or slits formed in the unitary element. Stiffer bearings have a greater self-correcting tendency but are less able to adjust for shaft misalignment.

Tests have shown that the bearings described exhibit dramatically improved performance even in comparison to the structure disclosed in the present inventors prior patent No. US-A-4 496 251. In a recent test the journal bearings described were utilized in a radial bearing with a radial envelope of 2.31mm (0.091"). Inward deflections of the bearing pad were .0076mm (0.0003") which provides exceptional stability and bearing performance. A comparable displacement using the arrangement shown in the present inventor's prior patent No. US-A-4 496 251 would have required a radial space of 7.6mm (0.30").

In conventional hydrodynamic journal bearings, it is typically necessary to provide a fluid-film clearance between the bearing pad surface and the shaft portion to be supported. This requires extremely close manufacturing tolerances which can present an obstacle to high volume production.

The bearings described can be designed to obviate the need for such close manufacturing tolerances. Specifically, by providing appropriate bores, grooves and cuts or slits, it is possible to define a bearing having virtually any desired performance characteristic. One such characteristic is the stiffness or spring characteristic of the bearing pad in the direction of load, i.e., in the radial direction (radial stiffness) with respect to journal bearings and in the axial direction (axial stiffness) with respect to thrust bearings. It is known in the bearing art that the fluid film between the shaft and the bearing may be modeled as a spring since it has a calculatable radial or axial fluid film stiffness or spring characteristic. This is true for both compressible and incompressible fluids but is particularly useful in regard to gas fluid lubricants. The fluid film stiffness and the bearing stiffness act in opposition to one another such that if the fluid film stiffness or spring characteristic exceeds the bearing stiffness or spring characteristic, the bearing will deflect in the direction of the fluid film stiffness (i.e., radial direction for journal bearings and axial direction for thrust bearings) until the stiffness of the fluid and the bearing are in equilibrium. Thus, it has been found that if a journal bearing is designed such that radial stiffness of the bearing is less than the radial stiffness of the fluid film, it is not necessary to provide a precise spacing between the shaft and the bearing because the radial stiffness of the fluid film will automatically and instantaneously, upon rotation of the shaft, cause appropriate radial deflection of the journal bearing. The virtually instantaneous wedge formation results in virtually instantaneous formation of the protective fluid film thereby preventing damage to wedge forming surface which typically occurs at low speeds during the formation of the fluid film.

The radial stiffness of the bearing is, of course, primarily a function of the section or flexure modulus of the support structure which depends on the shape of the support structure. The radially stiffness of the pad also depends on the length of the slits or cuts formed in the bearing. The same is true of thrust bearings except, naturally, the axial stiffness of the bearing is critical. Accordingly it is possible to achieve high performance without the close manufacturing tolerances typically required of hydrodynamic bearings.

For example, the bearings may be designed to have an interference fit when installed on the shaft such that as the bearing is forced on the shaft the pads deflect, slightly so as to form a converging wedge shape while in the stationary installed position. Contact between the bearing pad and shaft being at the trailing edge. At instantaneous start up, the fluid film enters the wedge and builds up fluid pressure causing separation of the shaft and pad. Thus , the bearings may be designed and dimensioned such that the trailing edge of the bearing is in contact with the shaft portion to be supported when the shaft is at rest.

The thrust bearings can also be designed to provide a statically loaded wedge. In order to provide a statically loaded wedge, the support structure for the bearings is designed such that the bearing pads slope toward the shaft from the radially inner circumferential edge of the bearing pad to the radially outer circumferential edge of the bearing pad. Further, the support structure is designed such that the bearing pad slopes toward the shaft from the radially extending leading edge to the trailing edge. In this way, a statically loaded wedge approximating the optimum wedge is formed. Further, the pad is sloped toward the shaft at the outer circumferential edge so as to provide the desired fluid retaining characteristic. The stiffness of the support structure can also be designed such that an appropriate space inbetween the pads and shaft is established instantaneously upon rotation of the shaft.

Alternatively, the bearing may be designed such that the entire bearing pad contacts the shaft portion to be supported when the shaft is at rest. This aspect is particularly useful in high volume production of the bearings and with bearings using gas lubricating fluids because it allows a much larger variation of machining tolerances. In one example, a 0.076mm (.003 inch) variation can be designed to have an insignificant impact on the wedge whereas conventionally machining of known gas bearings require a tolerance which can only be attained through the use of sophisticated and expensive machining techniques such as micro inch machining via etching.

Hydrodynamic radial bearings constructed along the lines of the previously discussed hydrodynamic bearings can be constructed so as to be adapted to be secured to the rotating shaft for movement with the shaft or relative to a static support surface in the housing. The general configuration of bearings adapted to be mounted to the rotating shaft is similar to that of the general bearings discussed above, but with a radially inverted construction. Because of the inverse orientation of support, there are naturally differences in the construction. For instance, the runner pad portions of the bearings which rotate with the shaft are supported on a radially inward support structure. The support structure supports the bearing pads for deflection radially inward and outward to establish a hydrodynamic wedge with respect to the smooth portion of the housing. As the bearing rotates with the shaft, centrifugal force acts on the bearing pads tending to force the bearing pads outward toward the smooth surface of the housing.

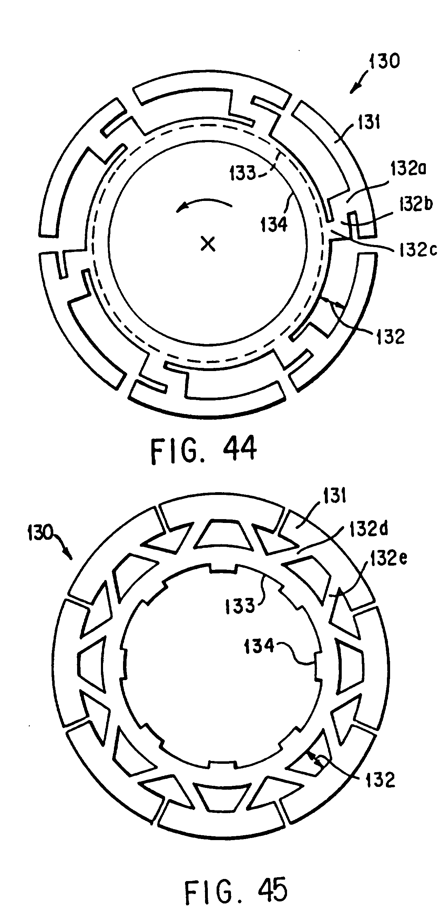

An example of one such bearing construction is shown in Figure 44. This bearing is basically a radially inverted version of the bearing of Figures 4-6. The bearing 130 includes an outer diameter which is substantially cylindrical, but divided into a plurality of circumferential bearing pads 131. The bearing pads shown are relatively thick for two reasons. First, the thickness inhibits deformation of the bearing pad 131. Second, the thickness increases the mass of the bearing pads 131 so that, as the shaft rotates, the centrifugal force tending to pull the bearing pads 131 outward is increased. Because of the tendency of the pads 131 to deflect outward, the bearings can be dimensioned so as to have a clearance with the housing. Of course, if desired, the pads 131 could be thinner so as to allow deformation of the pad and/or to limit the effect of centrifugal force.

The foregoing considerations relate to any bearing described which is designed to be mounted to the shaft. The difference between the various bearings of this type resides in the support structures used to support the bearing pads. Generally, any of the previously described radial bearing support structures can be adapted for use as a support structure for the bearing pads 131. However, there are differences owing to the inverse orientation of the supports. In the bearing construction shown in Figure 44, the pads 131 are supported on a primary support portion 132 which includes a plurality of first stub-like or radial beams 132a, circumferential beams 132b, and second stub-like or radial beams 132c. The primary support portion 132 and the bearing pads 131 are supported on a continuous membrane 133 which functions as a secondary support portion. As shown, the membrane 133 is very thin in the radial direction (and thus flexible in this direction) and stretches between support beams or legs 134 which function as a tertiary support portion. As with the bearing of Figures 4-6, the membrane 133 could be divided into a plurality of axially extending beams by providing radial cuts through the membrane. In the embodiment shown in Figures 43A and 43B, the support beams or legs 134 are continuous cylindrical members and are relatively rigid such that the thin membrane 133 is supported in a trampoline-like fashion. As with the other bearings described heretofore, the support legs could have a different construction.

The construction of the bearing shown in Figure 43 is designed for unidirectional support. Specifically, the arrangement of the support structure depicted in Figure 44 supports the pads for proper deflection only when the bearing is rotated in the direction indicated. Upon such rotation, the leading edge (the edge furthest from the support structure) deflects inward away from the housing and the trailing edge deflects outward toward the housing so as to form a hydrodynamic wedge between the bearing pads and housing.

Another bearing which is adapted to be mounted for rotation with the shaft is shown in Figure 45. This bearing is the radially inverted version of the bearing depicted in Figure 32. The bearing is similar to that shown in connection with Figure 44. The difference between the two constructions resides mainly in the construction of the support structure. For instance, the construction of Figure 45, includes axially extending beams or leg portions 134 rather than the continuous circumferential legs of the bearing of Figure 44. Also, the primary support includes a symmetrical arrangement of angled beams 132d and 132e. By virtue of the symmetrical construction of this bearing, it is bidirectional. The bearing is also easily moldable because it has no "hidden" openings.

Upon rotation of the bearing with respect to the housing, the support structure deflects so that a hydrodynamic wedge is formed between the pad and housing.

In a similar matter, any of the general bearing constructions illustrated above can be adapted for use as a bearing mounted to the shaft rotation with respect to a fixed surface. Generally, it is only necessary that the structure be inverted along the lines discussed above.

Generally, any of the bearings described above or any combination of such bearings can be enclosed in a sealed housing of the type disclosed herein. Normally, in designing a sealed bearing assembly each bearing will have its housing or base portion secured to the static portions of the housing and the pads will be located so as to support a surface which is rotatably secured to the shaft. Naturally, other types of hydrodynamic bearings can be enclosed within the sealed housing. For instance, it is believed that the bearing pads disclosed in U.S. Patent No. 4,676,668 are particularly well suited for use in a sealed bearing enclosure.

Figure 42 shows a construction in which the static housing portion 2 functions as the carrier for individual pads 420. The surfaces of the pads 420 are adapted to support a planar surface of the rotatable housing portion 3. Again, the rotatable housing portion 3 rotates with the shaft 5 relative to the static housing portion 2. In this way, the pads 420 support thrust loads acting on the shaft through the rotating housing portion.

In small quantities, the bearings disclosed herein are preferably constructed by electrical discharge machining or laser cutting methods. The double lines shown in the drawings are the actual paths of the wire or beam which is typically 0.50-1.52mm (0.002-0.060") in diameter. The lubricant that flows into the electrical discharge machined paths, acts as a fluid dampener that reduces any vibration or instability at resonant frequencies. In the situations described above where a continuous cylindrical membrane is formed, the damping takes the form of a dash pot that exhibits high damping characteristics. A significant consideration in the design is that the support structure length and direction be oriented to provide the inward deflection shown in Figure 3. Also minute deflections of the pads themselves in the direction of load as shown in Figure 9, result in eccentricity changes which further improve bearing performance. It is noted that in Faires, Design of Machine Elements the distance between the center of the bearing and the center of the shaft is called the eccentricity of the bearing. This terminology is well known to those skilled in bearing design. With the novel approach of tuning or modifying the stiffness of the bearing configuration or structure and particularly the beam to suit a particular bearing application, optimum performance is readily obtained. Recent computer analysis has demonstrated that virtually any stiffness or deflection may be accomplished.

As noted above, when manufacturing low volumes or prototypes of the bearings, the bearings are preferably constructed by electrical discharge machining or laser cutting methods. Such small volumes or prototypes are usually constructed of metal. However, when higher volume production of a particular bearing is contemplated, other methods of manufacture such as injection molding, casting, powdered metal die casting and extrusion are more economical. In connection with such manufacturing methods, it may be more economical to employ plastics, ceramics, powdered metals or composites to form the bearings. It is believed that methods such as injection molding, casting, powdered metal die casting with sintering and extrusion are sufficiently well known that the processes need not be detailed herein. It is also believed that once a prototype bearing is constructed, the method of producing a mold or the like for mass production of the bearing is well known to those skilled in the molding and casting art. Moreover, it is to be understood that only certain types of the bearings are adapted to be made in high volumes through extrusion. Generally, these are the bearings that are formed only through the provision of circumferential grooves and radial and circumferential cuts or slits which extend axially throughout the entire bearing. In other words, those bearings having a constant or otherwise extrudable cross-section.

An investment casting method has been found to be particularly useful in the manufacture of intermediate quantities, e.g., less than 5,000 bearings. In accordance with this method of manufacture, the first step of the investment casting procedure is manufacture of a prototype bearing. As discussed above and detailed below, the prototype can be manufactured in any number of ways, but is preferably manufactured by machining a piece of heavy walled tubing or similar cylindrical journal. In larger bearings, the cylindrical journal typically is machined using a lathe for forming face and circumferential grooves, and a mill for forming axial and radial bores. In machining smaller cylindrical journals, techniques such as water-jet cutting, laser and wire electrical discharge techniques are generally more suitable. However, in either application the journals are typically turned and milled to form the larger grooves.

After the prototype bearing is formed, it may be desirable to test prototype to confirm that the bearing functions in the predicted manner. As a result of such testing, it may be necessary to modify and refine the prototype to obtain the desired results.

Once a satisfactory prototype is obtained, a rubber mold of the prototype is formed. Typically, this step involves encasing the prototype in molten rubber and allowing the rubber to harden so as to form a rubber mold of the prototype. The rubber encasing the prototype is then split and the prototype is removed to yield an open rubber mold.

Once the rubber mold is obtained, it is used to form a wax casting. This step typically involves pouring molten wax into the rubber mold and allowing the wax to harden to form a wax casting of the bearing.

After the wax casting is obtained, it is used to form a plaster mold. This step typically involves encasing. the wax casting and plaster, allowing the plaster to harden around the-wax casting so as to form a plaster mold.

The plaster mold can then be used to form a bearing. Specifically, molten bearing material, such as bronze, is poured into the plaster mold so as to melt and displace the wax casting from the mold. Thus, the plaster mold is filled with molten bearing material and the melted wax is removed from the plaster mold.

After the molten bearing material is allowed to harden, the plaster mold is removed from around the bearing and a bearing is obtained.

Because this method of manufacture involves the sacrifice of a wax casting, it is known as investment casting or sacrificial casting.

Despite the fact that the investment or sacrificial casting method described above involves sacrifice of a wax casting and the production of both rubber and plaster molds, and is quite labor intensive, it has proven to be cost effective when intermediate quantities, e.g., less than 5,000 units, of a particular bearing are required. The cost effectiveness of this procedure for lower quantity bearing requirements is due to the fact that the molds used in this method are far less expensive to produce than the complex mold required for injection molding or powdered metal casting.

As noted above, the first step in the investment casting method, indeed in any method, of producing the bearings described is the production of a prototype bearing. The relatively complex journal and thrust bearings can be formed using simple manufacturing techniques. Similar techniques are used for both thrust and journal bearings.

With the foregoing in mind, it is believed sufficient to describe the method of making a single journal bearing through the use of electrical discharge manufacturing and machining. It is believed that a description of such manufacture demonstrates the ease with which the relatively complex bearing shapes can be achieved.

Each bearing is initially in the form of a cylindrical blank having a cylindrical bore as shown in Figures 11A and 11B. The blank is then machined to provide a radial lubricating fluid groove as shown in Figures 12A and 120. For certain applications, it is desirable to further machine the blank to include facing grooves which are preferably symmetrically disposed on the radial faces of the bearings as shown in Figures 13 and 13B. The provision of such facing grooves ultimately results in a bearing which is easily torsionally deflected. While the groove shown in Figures 13A and 130 are cylindrical, it is possible to provide tapered grooves as shown in Figures 14A and 14B. As will become evident below, this yields a bearing which exhibits improved deflection characteristics by virtue of the angled alignment of the support beams. In this context, it should be noted that it is preferable that the support beams as viewed in Figure 14A are tapered along lines which converge at a point proximate the center line of the shaft. This ensures that flexibility occurs about the shaft center line by establishing a center of action for the entire system such that the pads may adjust to shaft misalignment. In essence, the tapering of the support beams causes the bearing to act in a manner similar to a spherical bearing by concentrating the support forces on a single point about which the shaft may pivot in all directions to correct any misalignment. The arrows in Figure 14A illustrate the lines of action of the deflection.

Bearings having cross sections of the type shown in Figures 12A and 14A are particularly effective at retaining the hydrodynamic fluid. This is because the bearing pad is supported proximate the axial ends of the bearing pad and the central portion of the bearing pad is not directly supported. By virtue of this construction, the bearing pad is supported so as to deform under load to form a fluid retaining concave pocket, i.e. the central portion of the bearing pad deflects radially outward. This greatly decreases fluid leakage. Naturally, the degree of pocket formation depends of the relative dimensions of the bearing pad and support structure. A larger fluid retaining pocket could be obtained by providing a thinner bearing pad surface and supporting the pad surface at the extreme axial ends of the bearing pad.

After the cylindrical blank is properly machined as shown in Figures 12A and 120, Figures 13A and 13B, or Figures 14A and 14B radial and/or circumferential slits or grooves are formed along the radial face of the machined blank to define the bearing pads, the beam supports and the housing. Figures 14C and 14D illustrate such grooves formed in the machined blank of Figures 14A and 140. When manufacturing low volumes of the bearings or prototypes of the bearings for use in the construction of a mold, the cuts or slits are preferably formed through electrical discharge manufacturing or through the use of a laser. The machining of the cylindrical blanks to achieve the configurations illustrated in Figures 12A and 12B, Figures 13A and 13B, Figures 14A and 148 or a similar shape can be done through conventional machine tools such as lathe or the like.

Although the foregoing discussion is specifically directed to journal bearings, the principles apply just as well to thrust bearings. For instance, the thrust bearing shown in Figures 15-18 can be formed by machining a section of heavy walled tubing to provide radially inner and outer grooves, facing grooves, axial bores, radial cuts and chamfers so as to define bearing pads and support structure.

The performance characteristics of the bearings results from the relative shape, size, location and material characteristics of the bearing pads and the beam supports defined by the bores and cuts or slits formed in the machined blank. These parameters are largely defined by the dimensions and location of the radial circumferential bores, cuts or slits formed in the bearing in conjunction with the shape of the machined blank in which the bores or slits are formed to yield the bearing.

As noted above, while the construction of the bearings is most easily understood by reference to the machining process, larger quantities are preferably manufactured through the investment casting method, and even larger scale production of the bearings could be more economically performed through injection molding, casting, powdered metal, die casting, extrusion or the like.

In extruding a large number of bearings from a pipe-like cylindrical blank, radial lubricating fluid grooves as shown in Figures 12A and 120 can be provided along the length of the pipe-like cylindrical blank prior to extrusion. However, if facing grooves were desired in the bearing, these can be individually defined after slicing the individual bearings from the extruded and machined blank. For this reason, extrusion might not be a preferred method of producing bearings which require facing grooves to enhance torsional flexibility.

**Claims**

1. A sealed hydrodynamic bearing, the bearing comprising:

   a sealed housing (10) which includes a static housing portion (2) secured to the housing and non-rotatable therewith, a rotatable housing portion (3) mounted on a shaft (5) and rotating therewith, and a plurality of seals (7) for providing a fluid tight seal between the static housing portion and the rotating housing portion so as to seal the interior of the housing;
   a hydrodynamic bearing secured to one of the static housing portion (2) and the rotatable housing portion (3), the hydrodynamic bearing comprising:
   a plurality of spaced bearing pads (12) and a support structure (14, 16) supporting said bearing pads (12);

   each of the seals comprising a ferrofluid (4) influenced by a magnetic field so as to form a fluid barrier between the static housing portion (2) and the rotatable housing portion (3).

2. The sealed hydrodynamic bearing of claim 1, comprising a unitary cylindrical member having a radially inner surface, a radially outer surface and two planar axial surfaces,

   said cylindrical member being formed with a plurality of radial cuts formed in the planar axial surface of the member and at least one of a cylindrical groove extending radially outward of the radially inner surface and a cylindrical groove extending radially inward of the radially outer surface,
   said radial cuts and cylindrical grooves together defining the plurality of circumferentially spaced bearing pads and a unitary support structure comprising at least one integral beamlike member that supports each pad,
   wherein each pad comprises circumferentially extending and radially extending edges and an axial shaft engaging face surface, one of the radially extending edges of each pad comprising a leading edge (15) and another radially extending edge of each pad comprising a trailing edge (17), a face (13) of the pad being adapted under the action of friction and pressure on the surface to rock relative to the support member whereby the trailing and leading edges of the face surface of the pad deflect to form a converging wedge.

3. The sealed hydrodynamic bearing of claim 1, wherein each of said pad means comprising a substantially planar load engaging face member, the support structure being unitary and comprising at least one of a plurality of beam-like members and a membrane having at least a portion thereof extending substantially parallel to said face members of said plurality of bearing pads, said face members having a load engaging surface to operatively support an opposing relatively moving part of said shaft, said face members being adapted under the action of friction and pressure on said load engaging face surface to move relative to the axial portion of the shaft to form- a converging wedge shape to operatively support said shaft part in a bearing relationship, said support structure supporting said bearing pad for at least one of axial deflection and torsional twisting.

4. The sealed hydrodynamic bearing of claim 1, wherein each said bearing pad being supported on a flexible membrane, said membrane permitting the pad to move in any direction to optimize wedge formation, and said membrane providing fluid damping in at least one direction.

5. The sealed hydrodynamic bearing of claim 1, wherein the support structure is designed to support the pads for movement with six degrees of freedom in an optimal fashion such that under normal loading the trailing edge of the pad is deflected toward the shaft portion and the leading edge of each pad is deflected away from the shaft portion so that the trailing edge is closer to the shaft portion than the leading edge is to the shaft portion.

6. The sealed hydrodynamic bearing of claim 5 wherein the bearing pads are unitary with said support structures.

7. The sealed hydrodynamic bearing of claim 1, wherein said support structure supportes the bearing pads such that the bearing pads have a predetermined stiffness, a fluid film located between the bearing pad faces and the shaft portion, the fluid film having a characteristic stiffness, wherein the stiffness of the fluid film is greater than the stiffness of the bearing pads such that the fluid film causes deflection of the bearing pads upon rotation of the shaft portion.

8. The sealed hydrodynamic bearing of claim 1, the hydrodynamic bearing comprising:

a plurality of shaft support pads spaced about an axis; each shaft support pad having a substantially planar shaft support pad surface which lies in a plane substantially transverse to the axis about which the pads are spaced; at least one pad supporting beam supporting each of the shaft supporting pads, each of the pad supporting beams extending transversely away from the shaft support pad surface and parallel to said axis; at least one beam supporting member, said beam supporting member - comprising one of a plurality of beams and a membrane, said beam supporting member designed so as to support each of the pad supporting beams for movement with six degrees of freedom so as to form an optimum hydrodynamic wedge under normal loading; and a supplemental support member designed to support the beam supporting member for movment with six degrees of freedom so as to form an optimum hydrodynamic wedge under normal loading.

9. The sealed hydrodynamic bearing of claim 1, comprising a unitary member to support the rotating shaft, the member comprising the plurality of shaft support pads and the pad support structure, the shaft support structure supporting each of the shaft support pads for movement with six degrees of freedom so as to optimize formation of a hydrodynamic wedge under loading; at least one piezoelectric element, and a current supply means for supplying current to the piezoelectric element so as to cause changes in the shape of the piezoelectric element; the piezoelectric element being located such that changes in its shape cause changes in the orientation of at least one of the shaft support pads and the support structure.

10. The sealed hydrodynamic bearing of claim 9, wherein the pad support structure comprises a primary support portion, a secondary support portion and a tertiary support portion.

11. The sealed hydrodynamic bearing of claim 1,

wherein the bearing pad support structure comprises:
at least one beam member supporting each one of said plurality of bearing pads; a continuous membrane supporting each first beam member and a plurality of beams supporting the continuous membrane.

12. The bearing of any of the preceding claims further comprising at least one piezoelectric element, the piezoelectric element having a shape which is changeable and the piezoelectric element being located such that, when its shape changes, the orientation of at least one of the bearing pads changes.

13. The sealed hydrodynamic bearing of claim 1,

wherein the bearing pad support structure comprises:
a plurality of first beam members, each first beam member supporting one of said plurality of bearing pads;
a plurality of second beam members, each second beam member supporting a first beam member; and
at least one support member supporting the plurality of second beam members.

14. The sealed hydrodynamic bearing of claim 1, wherein the plurality of bearing pads is secured to the static housing portion, and each of the bearing pads comprises a pad surface, a primary support portion, a secondary support portion and a tertiary support portion.

15. The bearing of claim 14, wherein the primary support portion is a hollow frustum shaped member.

16. The bearing of claim 14, wherein the primary support portion includes a plurality of conically inclined legs converging toward a point located above the pad surface.

17. The sealed hydrodynamic bearing of any of the preceding claims, wherein the static housing portion has two axial ends, each axial end having a radially innermost edge and the rotatable housing portion has two axial ends, each axial end having a radially outermost surface, the radially outermost surfaces of the ends of the rotatable housing portion being spaced from the radially innermost surf aces of the ends of the static housing portion so as to define a radial gap at opposed axial ends of the sealed housing;

the plurality of seals comprising a magnet provided on one of the radially innermost edges of the ends of the static housing portion and the radially outermost edges of the ends of the rotatable housing portion and a ferrofluid substantially filling said radial gap, the magnetic field of the magnets causing said ferrofluid to form a fluid barrier across said radial gap.

**Patentansprüche**

1.  Ein abgedichtetes hydrodynamisches Lager, wobei das Lager umfaßt:

    ein abgedichtetes Gehäuse (10), welches ein statisches Gehäuseteil (2) umfaßt, das an dem Gehäuse befestigt und nicht drehbar damit ist, ein drehbares Gehäuseteil (3), das an einer Welle (5) angebracht ist und sich damit dreht, und eine Vielzahl von Dichtungen (7), um eine strömungsmitteldichte Abdichtung zwischen dem statischen Gehäuseteil und dem rotierenden Gehäuseteil zu schaffen, um so den Innenraum des Gehäuses abzudichten; ein hydrodynamisches Lager, das an einem von dem statischen Gehäuseteil (2) und dem drehbaren Gehäuseteil (3) befestigt ist, wobei das hydrodynamische Lager umfaßt:

    eine Vielzahl von unterteilten Lagersegmenten (12) und eine Tragekonstruktion (14, 16), die die Lagersegmente (12) trägt; wobei

    jede Abdichtung ein Ferroströmungsmittel (4) umfaßt, die durch ein magnetisches Feld beeinflußt wird, um so eine Strömungsmittelbarriere zwischen dem statischen Gehäuseteil (2) und dem drehbaren Gehäuseteil (3) zu bilden.

2.  Das abgedichtete hydrodynamische Lager nach Anspruch 1, welches umfaßt:

    ein einheitliches zylindrisches Teil, das eine radial innenliegende Oberfläche, eine radial außenliegende Oberfläche und zwei ebene axiale Oberflächen hat, wobei das zylindrische Teil mit einer Vielzahl von radialen Einschnitten, die in der planaraxialen Oberfläche des Teiles gebildet sind, und mit mindestens einer zylindrischen Aussparung, die sich von der radial innenliegenden Oberfläche radial nach außen erstreckt, und mit eine zylindrischen Aussparung gebildet ist, die sich von der radial außenliegenden Oberfläche radial nach innen erstreckt; wobei die radialen Einschnitte und zylindrischen Aussparungen zusammen die Vielzahl von am Umfang unter Abstand angeordneten Lagersegmenten und eine einheitliche Tragekonstruktion bilden, die mindestens ein integriertes tragekörperähnliches Teil umfaßt, das jedes Segment trägt, worin jedes Segment sich kreisförmig und radial erstreckende Kanten und eine axiale an der Welle angreifende Stirnseitenoberfläche umfaßt, wobei eine der sich radial erstreckenden Kanten eines jeden Segmentes eine vordere Kante (15) und eine andere sich radial erstreckende Kante von jedem Segment eine hintere Kante (17) umfaßt, wobei eine Stirnseite (13) des Segments unter der Wirkung von Reibung und Druck auf die Oberfläche in der Lage ist, sich relativ zu dem Trägerteil hin- und herzubewegen, wobei die hintere und die vordere Kante der Stirnseitenoberfläche des Segmentes so verlaufen, daß sie eine sich verjüngenden Keilform bilden.

3.  Das abgedichtete hydrodynamische Lager nach Anspruch 1, worin jedes der Segmente umfaßt:

    ein im wesentlichen ebenes an der Last angreifendes Stirnseitenteil, die Tragekonstruktion, die einheitlich ist, und mindestens einen von einer Vielzahl von tragekörperähnlichen Teilen, und eine Membran, von der mindestens ein Teil sich im wesentlichen parallel zu dem Stirnseitenteil der Vielzahl von Lagersegmenten erstreckt, wobei das Stirnseitenteil eine an der Last angreifende Oberfläche zum wirksamen Tragen eines gegenüberliegenden, relativ dazu beweglichen Teiles der Welle hat, wobei die Stirnseitenteile in der Lage sind, sich unter der Wirkung von Reibung und Druck auf die an der Last angreifende Stirnseitenoberfläche relativ zu dem axialen Teil der Welle zu bewegen, um eine sich verjüngende Keilform zu bilden, um wirksam das Wellenteil als Lager zu tragen, wobei die Tragekonstruktion die Lagersegmente für zumindest eine der axialen Abweichung und der Torsionsdrehung trägt.

4.  Das abgedichtete hydrodynamische Lager nach Anspruch 1, worin jedes der Lagersegmente auf einer flexiblen Membran getragen ist, wobei die Membran es dem Segment ermöglicht, sich in jede Richtung zu bewegen, um die Keilbildung zu optimieren und wobei die Membran eine Strömungsmitteldämpfung in mindestens einer Richtung liefert.

5.  Das abgedichtete hydrodynamische Lager nach Anspruch 1, worin die Tragekonstruktion so aufgebaut ist, daß sie die Segmente für eine Bewegung in sechs Freiheitsgraden in optimaler Weise trägt, sodaß unter normaler Last die hintere Kante des Segmentes zu dem Wellenteil hin ausgelenkt wird und die vordere Kante von jedem Segment von dem Wellenteil weg ausgelenkt wird, so daß die hintere Kante näher als die vordere Kante an dem Wellenteil ist.

6.  Das abgedichtete hydrodynamische Lager nach Anspruch 5, worin die Lagersegmente mit den Tragekonstruktionen einheitlich sind.

**7.** Das abgedichtete hydrodynamische Lager nach Anspruch 1, worin die Tragekonstruktion die Lagersegmente so trägt, daß die Lagersegmente eine vorbestimmte Steifigkeit haben, wobei ein Strömungsmittelfilm zwischen den Lagersegment-Stirnseiten und dem Wellenteil angeordnet ist, wobei der Strömungsmittelfilm eine charakeristische Steifigkeit hat, worin die Steifigkeit des Srömungsmittelfilmes größer als die Steifigkeit der Lagersegmente ist, sodaß der Srömungsmittelfilm eine Auslenkungen der Lagersegmente bei einer Drehung des Wellenteiles verursacht.

**8.** Das abgedichtete hydrodynamische Lager nach Anspruch 1, wobei das hydrodynamische Lager umfaßt:

eine Vielzahl an Wellen-Trägersegmenten, die um eine Achse herum unter Abstand angeordnet sind; wobei jedes Wellen-Trägersegment eine im wesentlichen ebene Wellenträger-Segmentoberfläche hat, welche in einer Ebene liegt, die im wesentlichen quer zu der Achse ist, um welche die Segmente herum unter Abstand angeordnet sind; wenigstens ein Segment-Tragkörper, welcher jedes der Wellen-Trageteile trägt, wobei jeder Segment-Tragkörper sich transversal von der wellentragenden Segmentoberfläche weg und parallel zu der Achse erstreckt; mindestens ein Tragkörper-Trageteil, wobei dieses Tragkörper-Trageteil einen von einer Vielzahl von Tragkörpern und ein Membran umfaßt, wobei das Tragkörper-Trageteil so aufgebaut ist, daß es jeden der segmenttragenden Tragkörper für eine Bewegung mit sechs Freiheitsgraden trägt, um so einen optimalen hydrodynamischen Keil unter normaler Last zu bilden; und ein zusätzliches Trageteil, das so angeordnet ist, daß es das Tragkörper-Trageteil zur Bewegung in sechs Freiheitsgraden trägt, um so einen optimalen hydrodynamischen Keil unter normaler Last zu bilden.

**9.** Das abgedichtete hydrodynamische Lager nach Anspruch 1, das ein einheitliches Teil zum Tragen der drehenden Welle umfaßt, wobei das Teil die Vielzahl von Wellen-Trägersegmenten und die Segment-Tragekonstruktion umfaßt, wobei die Wellen-Tragekonstruktion jedes Wellen-Tragesegment zur Bewegung mit sechs Freiheitsgraden trägt, um so die Bildung eines hydrodynamischen Keils unter Last zu optimieren; mindestens ein piezo-elektrisches Element und eine Stromversorgungseinrichtung zur Versorgung des piezo-elektrischen Elementes mit Strom, um so Veränderungen in der Form des piezo-elektrischen Elementes zu verursachen; wobei das piezo-elektrische Element so angeordnet ist, daß Veränderungen in seiner Form Veränderungen in der Orientierung von mindestens einem der Wellen-Tragesegmenten und Tragekonstruktion verursacht.

**10.** Das abgedichtete hydrodynamische Lager nach Anspruch 9, worin die Segment-Tragekonstruktion einen ersten Trageabschnitt, einen zweiten Trageabschnitt und einen dritten Trageabschnitt umfaßt.

**11.** Das abgedichtete hydrodynamische Lager nach Anspruch 1, worin die Lagersegmant- Tragekonstruktion umfaßt:

mindestens ein Tragkörperteil, das jedes aus der Vielzahl der Lagersegmente trägt; eine kontinuierliche Membran, das jedes erste Tragkörperteil trägt und eine Vielzahl von Tragkörpern, die die fortlaufende Membran tragen.

**12.** Das Lager nach jedem der vorangegangenen Ansprüche, das weiterhin umfaßt:

mindestens ein piezo-elektrisches Element, wobei das piezo-elektrische Element eine Form hat, welche veränderbar ist, und das piezo-elektrische Element so angeordnet ist, daß, wenn es seine Form ändert, die Orientierung von mindestens einem der Lagersegmente sich verändert.

**13.** Das abgedichtete hydrodynamische Lager nach Anspruch 1, worin die Lagersegment-Tragekonstruktion umfaßt:

eine Vielzahl an ersten Tragkörperteilen, wobei jedes erste Tragkörperteil eines der Vielzahl an Lagersegmenten trägt; eine Vielzahl an zweiten Tragkörperteilen, wobei jedes zweite Tragkörperteil ein erstes Tragkörperteil trägt; und mindestens ein Trageteil, das die Vielzahl an zweiten Tragkörperteilen trägt.

**14.** Das abgedichtete hydrodynamische Lager nach Anspruch 1, worin die Vielzahl an Lagersegmenten an dem statischen Gehäuseteil befestigt ist, und jedes der Lagersegmente eine Segmentoberfläche, einen ersten Trageabschnitt, einen zweiten Trageabschnitt und einen dritten Trageabschnitt umfaßt.

**15.** Das Lager nach Anspruch 4, worin das erste Trageteil ein hohles kegelstumpfgeförmiges Teil ist.

**16.** Das Lager nach Anspruch 4, worin der erste Tageabschnitt eine Vielzahl von konisch abgeschrägten Beinen beinhaltet, die sich auf einen Punkt hin verjüngen, der über der Segmentoberfläche liegt.

**17.** Das abgedichtete hydrodynamische Lager nach einem der vorangegangenen Ansprüche, worin das statische Gehäuseteil zwei axiale Enden hat, jedes axiale Ende eine radial innenliegenden Kante und das drehbare Gehäuseteil zwei axiale Enden hat, jedes axiale Ende eine radial außenliegende Oberfläche hat, wobei die radial außenliegenden Oberflächen der Enden des drehbaren Gehäuseteiles von den radial innenliegenden Oberflächen der Enden des statischen Gehäuseteiles unter Abstand angeordnet sind, um so einen radialen Spalt bei gegenüberliegenden axialen Enden des abgedichteten Körpers zu definieren;

wobei die Vielzahl der Dichtungen einen Magneten, der an einer der radial innenliegenden Kanten des Endes von dem statischen Gehäuseteil und den radial außenliegenden Kanten des Endes des drehbaren Gehäuseteiles angeordnet ist, und eine Eisenflüssigkeit umfaßt, die im wesentlichen den radialen Spalt füllt, wobei das magnetische Feld der Magnete das Feroströmungsmittel dazu veranlaßt, eine Srömungsmittelbarriere über den radialen Spalt zu bilden.

## Revendications

**1.** Palier hydrodynamique hermétique, comprenant :

un logement hermétique (10) qui comprend une portion de logement statique (2) fixée sur le logement et non rotatif avec celui-ci, une portion de logement rotatif (3) montée sur un arbre (5) et tournant avec celui-ci, et une pluralité de joints d'étanchéité (7) pour assurer une étanchéité au fluide entre la portion de logement statique et la portion de logement rotatif de façon à rendre étanche l'intérieur du logement ; un palier hydrodynamique fixé sur l'une des portions de logement statique (2) et la portion de logement rotatif (3), le palier hydrodynamique comprenant : une pluralité de patins de palier espacés (12) et une structure de support (14, 16) sur laquelle sont montés les patins de palier (12) ; chacun des joints d'étanchéité comprenant un ferrofluide (4) influencé par un champ magnétique de façon à former une barrière de fluide entre la portion de logement statique (2) et la portion de logement rotatif (3).

**2.** Palier hydrodynamique hermétique selon la revendication 1, comprenant un élément cylindrique d'une seule pièce avec une surface interne radialement, une surface externe radialement et deux surfaces axiales planes,

cet élément cylindrique étant formé avec une pluralité de découpes radiales ménagées dans la surface axiale plane de l'élément et au moins l'une des gorges cylindriques s'étendant radialement vers l'extérieur de la surface interne radialement et une gorge cylindrique s'étendant radialement vers l'intérieur de la surface externe radialement,

les découpes radiales et les gorges cylindriques définissant ensemble la pluralité de patins de palier espacés circonférentiellement et une structure de support d'une seule pièce comprenant au moins un élément en forme de traverse solidaire qui supporte chaque patin, dans lequel chaque patin comprend des bords s'étendant circonférentiellement et une surface frontale coopérant avec l'arbre axial, l'un des bords s'étendant radialement de chaque patin comprenant un bord d'attaque (15) et un autre bord s'étendant radialement de chaque patin comprenant un bord de fuite (17), une face (13) du patin étant adaptée sous l'action de la friction et de la pression de façon à basculer par rapport à l'élément de support, les bords d'attaque et de fuite de la surface frontale du patin fléchissant pour former un coin convergent.

**3.** Palier hydrodynamique hermétique selon la revendication 1, dans lequel chacun des patins comprenant un élément de face d'engagement de charge sensiblement plat, la structure de support étant d'une seule pièce et comprenant au moins l'une des pluralités d'éléments en forme de traverses et une membrane ayant au moins une de ses portions s'étendant sensiblement parallèlement à ces éléments de face de la pluralité de patins de palier, les éléments de face comportant une surface d'engagement de charge supportant de façon opérante une pièce en regard relativement mobile de l'arbre, les éléments de face étant aptes sous l'action de la friction et de la pression sur la surface de face d'engagement de charge à se déplacer par rapport à la portion axiale de l'arbre pour former une configuration en coin convergente afin de supporter de façon opérante la partie d'arbre dans une relation de logement, cette structure de support supportant le patin de palier pour au moins une flexion axiale et une déformation en torsion.

**4.** Palier hydrodynamique hermétique selon la revendication 1, dans lequel chaque patin de palier est monté sur une membrane souple, cette membrane permettant au patin de se déplacer dans une quelconque direction pour optimiser la formation du coin, et la membrane assurant un amortissement fluide dans au moins une direction.

**5.** Palier hydrodynamique hermétique selon la revendication 1, dans lequel la structure de support est conçue pour supporter les patins pour le mouvement avec 6° de liberté d'une façon optimum de sorte que sous une charge normale, le bord de fuite du patin est fléchi vers la portion d'arbre et le bord d'attaque de chaque patin est fléchi en éloignement de la portion d'arbre, de sorte que le bord de fuite est plus proche de la portion d'arbre que le bord d'attaque ne l'est de la portion d'arbre.

6. Palier hydrodynamique hermétique selon la revendication 5, dans lequel les patins de palier forment une seule pièce avec les structures de support.

7. Palier hydrodynamique hermétique selon la revendication 1, dans lequel la structure de support supporte les patins de palier de telle sorte que ceux-ci ont une rigidité prédéterminée, une pellicule fluide située entre les faces de patin de palier et la portion d'arbre, la pellicule fluide ayant une rigidité caractéristique, dans lequel la rigidité de la pellicule fluide est supérieure à la rigidité des patins de palier de sorte que la pellicule fluide provoque un fléchissement des patins de palier lors de la rotation de la portion d'arbre.

8. Palier hydrodynamique hermétique selon la revendication 1, le palier hydrodynamique comprenant :

une pluralité de patins de support d'arbre espacés sur un axe ; chaque patin de support de palier ayant une surface de patin de support d'arbre sensiblement plane qui se situe dans un plan sensiblement transversal par rapport à l'axe sur lequel sont espacés les patins ; au moins une traverse de support de patin supportant chacun des patins de support d'arbre, chacune des traverses de support de patin s'étendant transversalement en éloignement de la surface de patin de support d'arbre et parallèlement à cet axe ; au moins un élément de support de traverse, cet élément de support de traverse comprenant l'une de la pluralité de traverses et une membrane, cet élément de support de traverse étant conçu pour supporter chacune des traverses de support de patin pour le mouvement avec 6° de liberté de façon à former un coin hydrodynamique optimum sous chargement normal ; et un élément de support supplémentaire conçu pour supporter l'élément de support de traverse pour le mouvement avec 6° de liberté de façon à former un coin hydrodynamique optimum sous charge normale.

9. Palier hydrodynamique hermétique selon la revendication 1, comprenant un élément d'une seule pièce pour supporter l'arbre en rotation, l'élément comprenant la pluralité de patins de support d'arbre et la structure de support de patin, la structure de support d'arbre supportant chacun des patins de support d'arbre pour le mouvement avec 6° de liberté de façon à optimiser la formation d'un coin hydrodynamique sous charge ; au moins un élément piézoélectrique, et un moyen d'alimentation de courant pour amener le courant sur l'élément piézoélectrique de façon à provoquer une modification de forme de l'élément piézoélectrique ; l'élément piézoélectrique étant situé de façon que des modifications dans sa forme entraînent des modifications dans l'orientation d'au moins l'un des patins de support d'arbre et de la structure support.

10. Palier hydrodynamique hermétique selon la revendication 9, dans lequel la structure de support de patin comprend une portion de support primaire, une portion de support secondaire et une portion de support tertiaire.

11. Palier hydrodynamique hermétique selon la revendication 1, dans lequel la structure de support de patin de palier comprend :

au moins un élément de traverse supportant chacun de la pluralité de patins de palier ; une membrane continue supportant chaque premier élément de traverse et une pluralité de traverses supportant la membrane continue.

12. Palier selon l'une quelconque des revendications précédentes, comprenant de plus au moins un élément piézoélectrique, l'élément piézoélectrique ayant une forme qui est modifiable et l'élément piézoélectrique étant situé de telle sorte que lorsque sa forme est modifiée, l'orientation d'au moins l'un des patins de palier est modifiée.

13. Palier hydrodynamique hermétique selon la revendication 1, dans lequel la structure de support de patin de palier comprend :

une pluralité de premiers éléments de traverse, chaque premier élément de traverse supportant l'un de la pluralité de patins de paliers ; une pluralité de seconds éléments de traverse, chaque second élément de traverse supportant un premier élément de traverse ; et au moins un élément de support supportant la pluralité des seconds éléments de traverse.

14. Palier hydrodynamique hermétique selon la revendication 1, dans lequel la pluralité de patins de palier est fixée sur la portion de logement statique et chacun des patins de palier comprend une surface de patin, une portion de support primaire, une portion de support secondaire et une portion de support tertiaire.

**15.** Palier selon la revendication 14, dans lequel la portion de support primaire est un élément en forme de tronc de cône creux.

**16.** Palier selon la revendication 14, dans lequel la première portion de support primaire comprend une pluralité de branches inclinées coniquement et convergeant vers un point situé au-dessus de la surface de patin.

**17.** Palier hydrodynamique hermétique selon l'une quelconque des revendications précédentes, dans lequel la portion de logement statique comporte deux extrémités axiales, chaque extrémité axiale ayant un bord interne extrême radialement et la portion de logement rotatif comportant deux extrémités axiales, chaque extrémité axiale ayant une surface externe extrême radialement, les surfaces externes extrêmes radialement des extrémités de la portion de logement rotatif étant espacées des surfaces internes extrêmes radialement des extrémités de la portion de logement statique de façon à définir un espace radial sur les extrémités axiales opposées du logement hermétique ;

la pluralité des joints d'étanchéité comprenant un aimant sur l'un des bords internes extrêmes radialement des extrémités de la portion de logement statique et des bords externes extrêmes radialement des extrémités de la portion de logement rotatif et un ferrofluide remplissant sensiblement l'espace radial, le champ magnétique des aimants ayant pour conséquence que le ferrofluide forme une barrière fluide à travers cet espace radial.

FIG. 1A

FIG. 1B

FIG. 1C

FIG. 1D

FIG. 1E

FIG. 2

FIG. 8

FIG. 2A

FIG. 4

FIG. 5

FIG. 3

FIG. 6

FIG. 6A

FIG. 31B

FIG. 32C

FIG. 33D

FIG.7

FIG.9

FIG.10

FIG.10A

FIG.5B

FIG.5A

FIG.11A

FIG.11B

FIG.13A

FIG.13B

FIG.12A

FIG.12B

FIG.14A

FIG.14B

FIG.14C

FIG.14D

FIG.15

FIG. 16

FIG. 15A

FIG. 26A

FIG. 29C

FIG. 37A

FIG. 17

FIG. 18

FIG. 19 PRIOR ART

34PA
32PA
36PA

FIG. 20 PRIOR ART

32 PA
34 PA
36 PA
38PA

FIG. 20A PRIOR ART

PD
L

FIG. 21

FIG. 22

FIG. 23

FIG. 24

FIG. 23A

FIG. 25

FIG. 26

FIG. 27

FIG. 28

EP 0 495 074 B1

FIG.29

FIG.30

FIG. 30A

FIG.29A
521A
521A    521A
521A    521A
521A
FIG.29A

FIG. 30B

544A
620    620
620    546A    620
620    620
FIG.29B
FIG.29B

FIG.29A

544A    521A    546A    521A
364A
380A    362A    382A

FIG.29B

380A    382A
544A    546A
521A    521A

EP 0 495 074 B1

FIG. 31

FIG. 31A

FIG. 32

FIG. 32A

FIG. 32 B

FIG. 33

FIG. 33A

FIG. 33B

FIG. 33C

FIG. 34

FIG.34A

FIG.34B

FIG.34C

FIG.34D

FIG.35

FIG.35A

FIG.35B

FIG. 36

FIG. 37

FIG. 38A

FIG. 38B

132m      132m

134mb    134mb

134ma

138m      136m

*FIG. 38C*

322m

321m

122m

323m

120m

134ma

146m

134mb

134m

142   142

326m

324m

134m    144

144

325m

*FIG. 38D*

FIG.38E

FIG.42A

FIG.42

EP 0 495 074 B1

FIG. 39A

FIG. 39B

232m

234ma

236

234ma

234mb

234mb

238

234mb

FIG. 39C

PP

40A

40A

732

740

742

750

FIG. 40

740 732

FIG. 40A

FIG.41

FIG.41A

FIG. 43

FIG. 43A

FIG. 44

FIG. 45